# EUROPEAN PATENT SPECIFICATION

(11) **EP 3 422 188 B1**
(45) Date of publication and mention of the grant of the patent: **26.01.2022**
(21) Application number: 18175273.4
(22) Date of filing: 30.05.2018
(51) Int. Cl.: G06F 11/34, G06F 11/30

(54) **TECHNOLOGIES FOR PRODUCING PROACTIVE NOTIFICATIONS OF STORAGE DEVICE PERFORMANCE**
TECHNOLOGIEN ZUR ERSTELLUNG PROAKTIVER BENACHRICHTIGUNGEN ÜBER DIE SPEICHERVORRICHTUNGSLEISTUNG
TECHNOLOGIES POUR PRODUIRE DES NOTIFICATIONS PROACTIVES DES PERFORMANCES D'UN DISPOSITIF DE STOCKAGE

(30) Priority: 30.06.2017 US 201715639465
(43) Date of publication of application: 02.01.2019
(73) Proprietor: INTEL Corporation, Santa Clara, CA 95054 (US)
(72) Inventor: DOSHI, Kshitij A., Tempe, AZ 85282 (US); BERNAT, Francesc Guim, 08036 Barcelona (ES); SCHMISSEUR, Mark A., Phoenix, AZ 85048 (US)
(74) Representative: Rummler, Felix

(56) References cited:
- US-A1- 2017 115 878
- US-B1- 8 856 335

## Description

### BACKGROUND

Typically, a storage device takes on a passive role in any analysis of the performance of the storage device and how the performance affects the execution of a workload (e.g., an application, process, etc.) that relies on the operations of the storage device. For example, typical storage devices are configured to receive and serve requests (e.g., to write or read data) from a requestor device and it is usually the responsibility of the requestor device to perform any monitoring and evaluation of how well the storage devices are responding. To do so, the requestor device is typically required to understand the capabilities of the storage devices and to collect and analyze telemetry data to look for any indications that the storage devices are underperforming, overloaded, or both. Performing such operations on the requestor device results in overhead, which increases particularly in big-data workloads where many devices may be working on portions of the same data structure. Additionally, it is time consuming to collect data from multiple storage devices and analyze it to conclude definitively that one or more of the storage devices are not satisfying a particular performance goal, such as a target latency for performing read or write operations.

US 2017/0115878 A1 relates to methods, apparatus and products for proactively tuning a storage array. US 8,856,335 B1 relates to a system and method for dynamically managing service-level objectives (SLOs) for workloads of a cluster system.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a diagram of a conceptual overview of a data center in which one or more techniques described herein may be implemented according to various embodiments;
FIG. 2 is a diagram of an example embodiment of a logical configuration of a rack of the data center of FIG. 1;
FIG. 3 is a diagram of an example embodiment of another data center in which one or more techniques described herein may be implemented according to various embodiments;
FIG. 4 is a diagram of another example embodiment of a data center in which one or more techniques described herein may be implemented according to various embodiments;
FIG. 5 is a diagram of a connectivity scheme representative of link-layer connectivity that may be established among various sleds of the data centers of FIGS. 1, 3, and 4;
FIG. 6 is a diagram of a rack architecture that may be representative of an architecture of any particular one of the racks depicted in FIGS. 1-4 according to some embodiments;
FIG. 7 is a diagram of an example embodiment of a sled that may be used with the rack architecture of FIG. 6;
FIG. 8 is a diagram of an example embodiment of a rack architecture to provide support for sleds featuring expansion capabilities;
FIG. 9 is a diagram of an example embodiment of a rack implemented according to the rack architecture of FIG. 8;
FIG. 10 is a diagram of an example embodiment of a sled designed for use in conjunction with the rack of FIG. 9;
FIG. 11 is a diagram of an example embodiment of a data center in which one or more techniques described herein may be implemented according to various embodiments;
FIG. 12 is a simplified block diagram of at least one embodiment of a system for producing and responding to proactive notifications of storage device performance;
FIG. 13 is a simplified block diagram of at least one embodiment of a storage sled of the system of FIG. 12;
FIG. 14 is a simplified block diagram of at least one embodiment of an environment that may be established by the storage sled of FIGS. 12 and 13;
FIG. 15 is a simplified block diagram of at least one embodiment of an environment that may be established by a requestor device of FIG. 12;
FIGS. 16-19 are a simplified flow diagram of at least one embodiment of a method for producing proactive notifications that may be performed by a storage sled of FIGS. 12 and 13; and
FIGS. 20-21 are a simplified flow diagram of at least one embodiment of a method for operating with proactive notifications that may be performed by a requestor device of FIG. 12 and 15.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims. The invention is defined in the appended independent claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

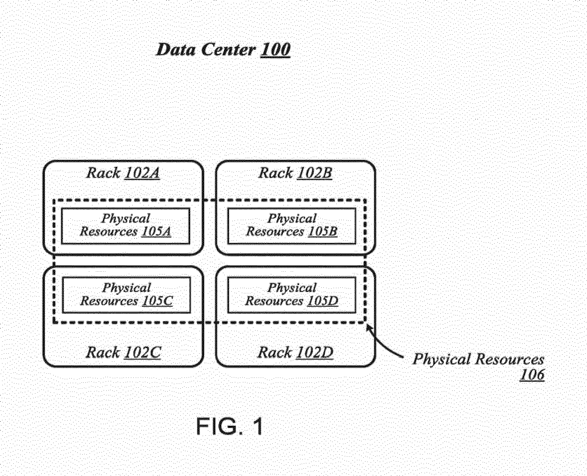

FIG. 1 illustrates a conceptual overview of a data center 100 that may generally be representative of a data center or other type of computing network in/for which one or more techniques described herein may be implemented according to various embodiments. As shown in FIG. 1, data center 100 may generally contain a plurality of racks, each of which may house computing equipment comprising a respective set of physical resources. In the particular non-limiting example depicted in FIG. 1, data center 100 contains four racks 102A to 102D, which house computing equipment comprising respective sets of physical resources (PCRs) 105A to 105D. According to this example, a collective set of physical resources 106 of data center 100 includes the various sets of physical resources 105A to 105D that are distributed among racks 102A to 102D. Physical resources 106 may include resources of multiple types, such as - for example - processors, co-processors, accelerators, field programmable gate arrays (FPGAs), memory, and storage. The embodiments are not limited to these examples.

The illustrative data center 100 differs from typical data centers in many ways. For example, in the illustrative embodiment, the circuit boards ("sleds") on which components such as CPUs, memory, and other components are placed are designed for increased thermal performance. In particular, in the illustrative embodiment, the sleds are shallower than typical boards. In other words, the sleds are shorter from the front to the back, where cooling fans are located. This decreases the length of the path that air must to travel across the components on the board. Further, the components on the sled are spaced further apart than in typical circuit boards, and the components are arranged to reduce or eliminate shadowing (i.e., one component in the air flow path of another component). In the illustrative embodiment, processing components such as the processors are located on a top side of a sled while near memory, such as DIMMs, are located on a bottom side of the sled. As a result of the enhanced airflow provided by this design, the components may operate at higher frequencies and power levels than in typical systems, thereby increasing performance. Furthermore, the sleds are configured to blindly mate with power and data communication cables in each rack 102A, 102B, 102C, 102D, enhancing their ability to be quickly removed, upgraded, reinstalled, and/or replaced. Similarly, individual components located on the sleds, such as processors, accelerators, memory, and data storage drives, are configured to be easily upgraded due to their increased spacing from each other. In the illustrative embodiment, the components additionally include hardware attestation features to prove their authenticity.

Furthermore, in the illustrative embodiment, the data center 100 utilizes a single network architecture ("fabric") that supports multiple other network architectures including Ethernet and Omni-Path. The sleds, in the illustrative embodiment, are coupled to switches via optical fibers, which provide higher bandwidth and lower latency than typical twisted pair cabling (e.g., Category 5, Category 5e, Category 6, etc.). Due to the high bandwidth, low latency interconnections and network architecture, the data center 100 may, in use, pool resources, such as memory, accelerators (e.g., graphics accelerators, FPGAs, ASICs, etc.), and data storage drives that are physically disaggregated, and provide them to compute resources (e.g., processors) on an as needed basis, enabling the compute resources to access the pooled resources as if they were local. The illustrative data center 100 additionally receives utilization information for the various resources, predicts resource utilization for different types of workloads based on past resource utilization, and dynamically reallocates the resources based on this information.

The racks 102A, 102B, 102C, 102D of the data center 100 may include physical design features that facilitate the automation of a variety of types of maintenance tasks. For example, data center 100 may be implemented using racks that are designed to be robotically-accessed, and to accept and house robotically-manipulatable resource sleds. Furthermore, in the illustrative embodiment, the racks 102A, 102B, 102C, 102D include integrated power sources that receive a greater voltage than is typical for power sources. The increased voltage enables the power sources to provide additional power to the components on each sled, enabling the components to operate at higher than typical frequencies.

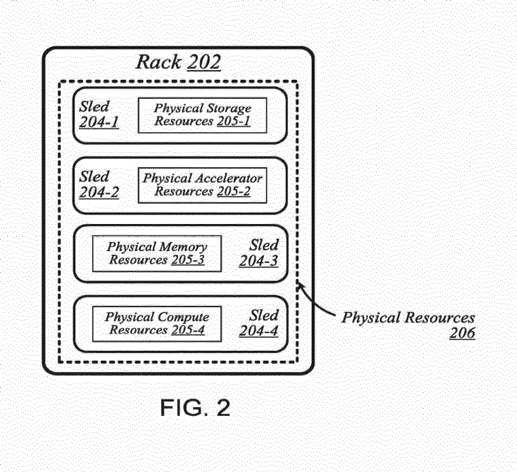

FIG. 2 illustrates an exemplary logical configuration of a rack 202 of the data center 100. As shown in FIG. 2, rack 202 may generally house a plurality of sleds, each of which may comprise a respective set of physical resources. In the particular non-limiting example depicted in FIG. 2, rack 202 houses sleds 204-1 to 204-4 comprising respective sets of physical resources 205-1 to 205-4, each of which constitutes a portion of the collective set of physical resources 206 comprised in rack 202. With respect to FIG. 1, if rack 202 is representative of - for example - rack 102A, then physical resources 206 may correspond to the physical resources 105A comprised in rack 102A. In the context of this example, physical resources 105A may thus be made up of the respective sets of physical resources, including physical storage resources 205-1, physical accelerator resources 205-2, physical memory resources 205-3, and physical compute resources 205-5 comprised in the sleds 204-1 to 204-4 of rack 202. The embodiments are not limited to this example. Each sled may contain a pool of each of the various types of physical resources (e.g., compute, memory, accelerator, storage). By having robotically accessible and robotically manipulatable sleds comprising disaggregated resources, each type of resource can be upgraded independently of each other and at their own optimized refresh rate.

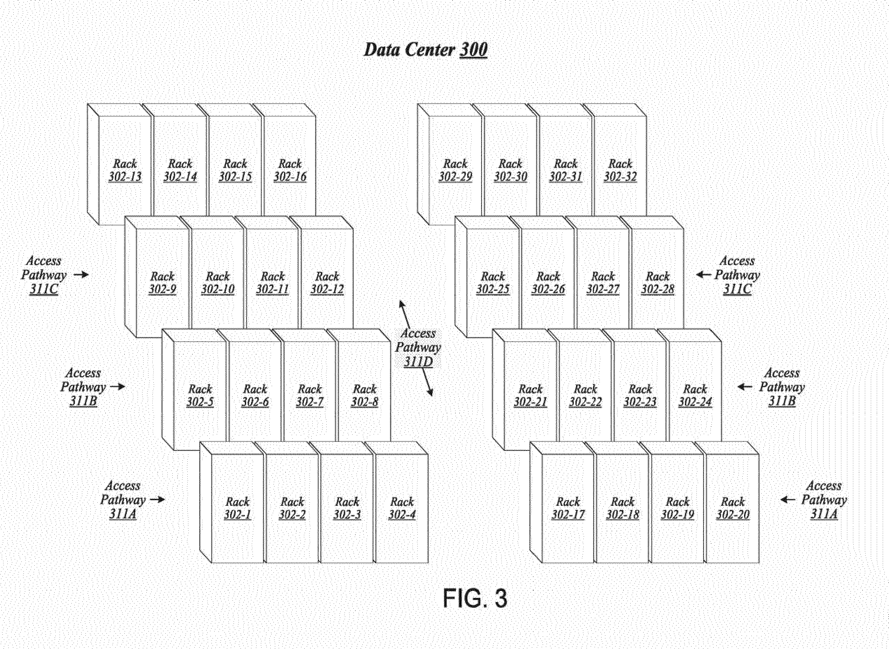

FIG. 3 illustrates an example of a data center 300 that may generally be representative of one in/for which one or more techniques described herein may be implemented according to various embodiments. In the particular non-limiting example depicted in FIG. 3, data center 300 comprises racks 302-1 to 302-32. In various embodiments, the racks of data center 300 may be arranged in such fashion as to define and/or accommodate various access pathways. For example, as shown in FIG. 3, the racks of data center 300 may be arranged in such fashion as to define and/or accommodate access pathways 311A, 311B, 311C, and 311D. In some embodiments, the presence of such access pathways may generally enable automated maintenance equipment, such as robotic maintenance equipment, to physically access the computing equipment housed in the various racks of data center 300 and perform automated maintenance tasks (e.g., replace a failed sled, upgrade a sled). In various embodiments, the dimensions of access pathways 311A, 311B, 311C, and 311D, the dimensions of racks 302-1 to 302-32, and/or one or more other aspects of the physical layout of data center 300 may be selected to facilitate such automated operations. The embodiments are not limited in this context.

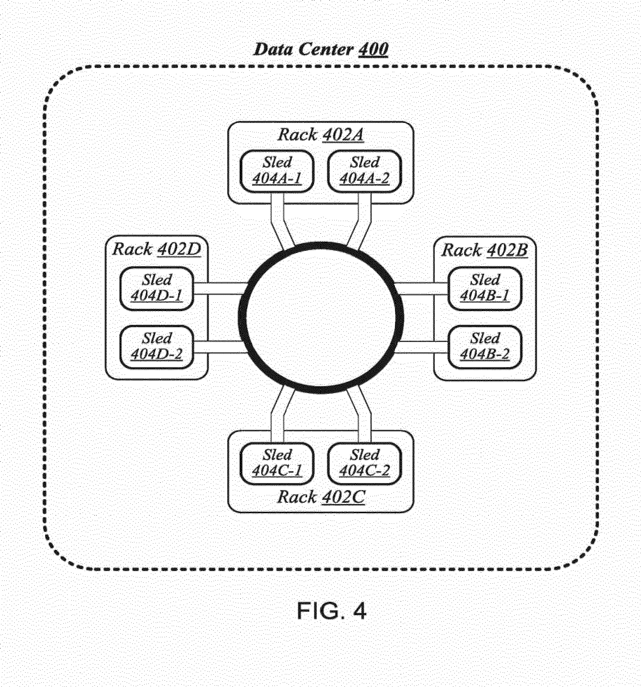

FIG. 4 illustrates an example of a data center 400 that may generally be representative of one in/for which one or more techniques described herein may be implemented according to various embodiments. As shown in FIG. 4, data center 400 may feature an optical fabric 412. Optical fabric 412 may generally comprise a combination of optical signaling media (such as optical cabling) and optical switching infrastructure via which any particular sled in data center 400 can send signals to (and receive signals from) each of the other sleds in data center 400. The signaling connectivity that optical fabric 412 provides to any given sled may include connectivity both to other sleds in a same rack and sleds in other racks. In the particular non-limiting example depicted in FIG. 4, data center 400 includes four racks 402A to 402D. Racks 402A to 402D house respective pairs of sleds 404A-1 and 404A-2, 404B-1 and 404B-2, 404C-1 and 404C-2, and 404D-1 and 404D-2. Thus, in this example, data center 400 comprises a total of eight sleds. Via optical fabric 412, each such sled may possess signaling connectivity with each of the seven other sleds in data center 400. For example, via optical fabric 412, sled 404A-1 in rack 402A may possess signaling connectivity with sled 404A-2 in rack 402A, as well as the six other sleds 404B-1, 404B-2, 404C-1, 404C-2, 404D-1, and 404D-2 that are distributed among the other racks 402B, 402C, and 402D of data center 400. The embodiments are not limited to this example.

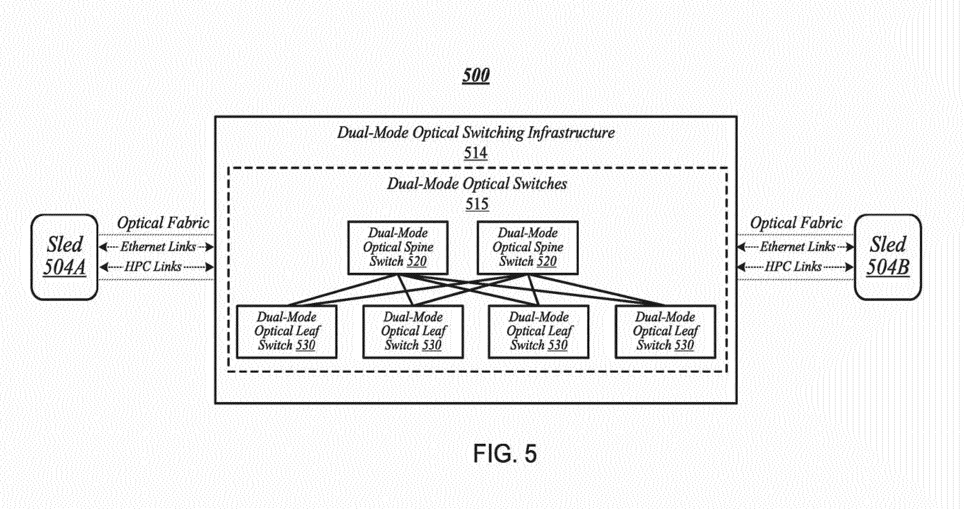

FIG. 5 illustrates an overview of a connectivity scheme 500 that may generally be representative of link-layer connectivity that may be established in some embodiments among the various sleds of a data center, such as any of example data centers 100, 300, and 400 of FIGS. 1, 3, and 4. Connectivity scheme 500 may be implemented using an optical fabric that features a dual-mode optical switching infrastructure 514. Dual-mode optical switching infrastructure 514 may generally comprise a switching infrastructure that is capable of receiving communications according to multiple link-layer protocols via a same unified set of optical signaling media, and properly switching such communications. In various embodiments, dual-mode optical switching infrastructure 514 may be implemented using one or more dual-mode optical switches 515. In various embodiments, dual-mode optical switches 515 may generally comprise high-radix switches. In some embodiments, dual-mode optical switches 515 may comprise multi-ply switches, such as four-ply switches. In various embodiments, dual-mode optical switches 515 may feature integrated silicon photonics that enable them to switch communications with significantly reduced latency in comparison to conventional switching devices. In some embodiments, dual-mode optical switches 515 may constitute leaf switches 530 in a leaf-spine architecture additionally including one or more dual-mode optical spine switches 520.

In various embodiments, dual-mode optical switches may be capable of receiving both Ethernet protocol communications carrying Internet Protocol (IP packets) and communications according to a second, high-performance computing (HPC) link-layer protocol (e.g., Intel's Omni-Path Architecture's, Infiniband) via optical signaling media of an optical fabric. As reflected in FIG. 5, with respect to any particular pair of sleds 504A and 504B possessing optical signaling connectivity to the optical fabric, connectivity scheme 500 may thus provide support for link-layer connectivity via both Ethernet links and HPC links. Thus, both Ethernet and HPC communications can be supported by a single high-bandwidth, low-latency switch fabric. The embodiments are not limited to this example.

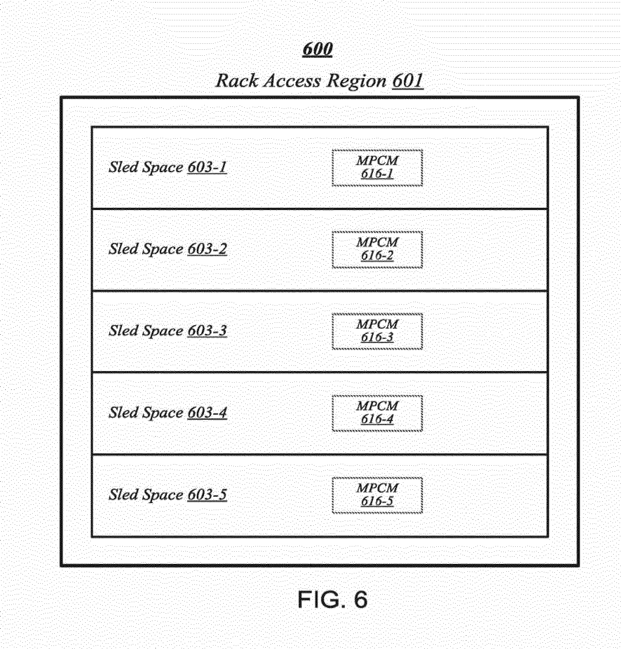

FIG. 6 illustrates a general overview of a rack architecture 600 that may be representative of an architecture of any particular one of the racks depicted in FIGS. 1 to 4 according to some embodiments. As reflected in FIG. 6, rack architecture 600 may generally feature a plurality of sled spaces into which sleds may be inserted, each of which may be robotically-accessible via a rack access region 601. In the particular non-limiting example depicted in FIG. 6, rack architecture 600 features five sled spaces 603-1 to 603-5. Sled spaces 603-1 to 603-5 feature respective multi-purpose connector modules (MPCMs) 616-1 to 616-5.

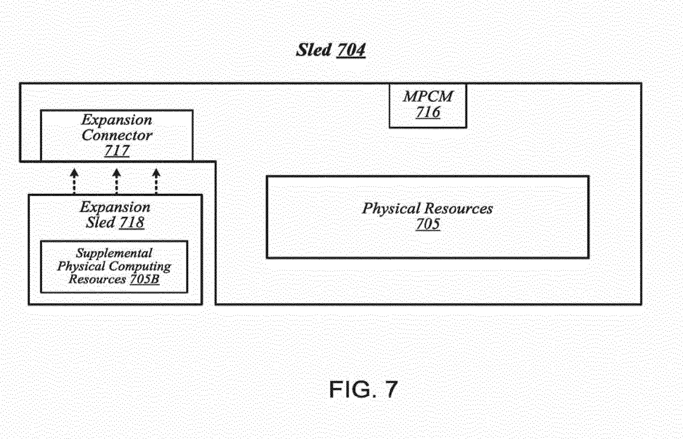

FIG. 7 illustrates an example of a sled 704 that may be representative of a sled of such a type. As shown in FIG. 7, sled 704 may comprise a set of physical resources 705, as well as an MPCM 716 designed to couple with a counterpart MPCM when sled 704 is inserted into a sled space such as any of sled spaces 603-1 to 603-5 of FIG. 6. Sled 704 may also feature an expansion connector 717. Expansion connector 717 may generally comprise a socket, slot, or other type of connection element that is capable of accepting one or more types of expansion modules, such as an expansion sled 718. By coupling with a counterpart connector on expansion sled 718, expansion connector 717 may provide physical resources 705 with access to supplemental computing resources 705B residing on expansion sled 718. The embodiments are not limited in this context.

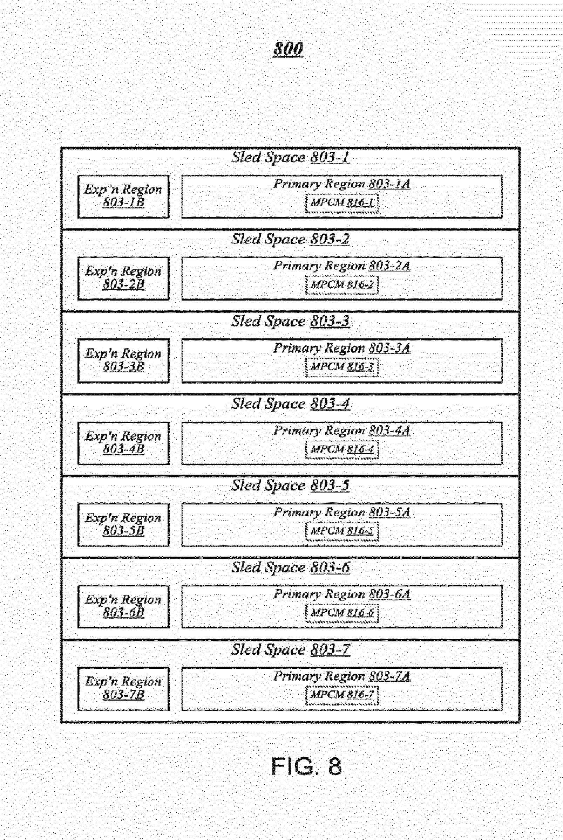

FIG. 8 illustrates an example of a rack architecture 800 that may be representative of a rack architecture that may be implemented in order to provide support for sleds featuring expansion capabilities, such as sled 704 of FIG. 7. In the particular non-limiting example depicted in FIG. 8, rack architecture 800 includes seven sled spaces 803-1 to 803-7, which feature respective MPCMs 816-1 to 816-7. Sled spaces 803-1 to 803-7 include respective primary regions 803-1A to 803-7A and respective expansion regions 803-1B to 803-7B. With respect to each such sled space, when the corresponding MPCM is coupled with a counterpart MPCM of an inserted sled, the primary region may generally constitute a region of the sled space that physically accommodates the inserted sled. The expansion region may generally constitute a region of the sled space that can physically accommodate an expansion module, such as expansion sled 718 of FIG. 7, in the event that the inserted sled is configured with such a module.

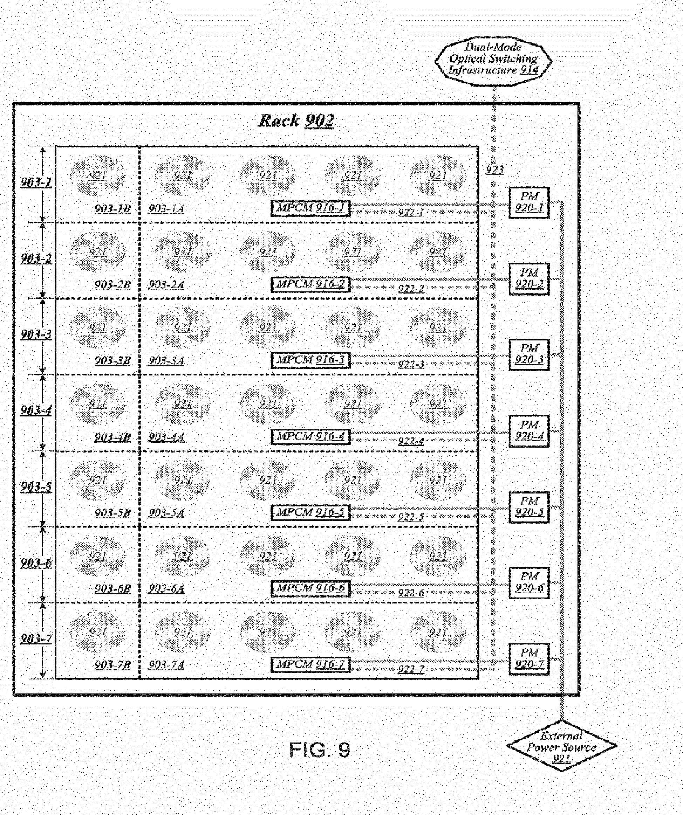

FIG. 9 illustrates an example of a rack 902 that may be representative of a rack implemented according to rack architecture 800 of FIG. 8 according to some embodiments. In the particular non-limiting example depicted in FIG. 9, rack 902 features seven sled spaces 903-1 to 903-7, which include respective primary regions 903-1A to 903-7A and respective expansion regions 903-1B to 903-7B. In various embodiments, temperature control in rack 902 may be implemented using an air cooling system. For example, as reflected in FIG. 9, rack 902 may feature a plurality of fans 919 that are generally arranged to provide air cooling within the various sled spaces 903-1 to 903-7. In some embodiments, the height of the sled space is greater than the conventional "1U" server height. In such embodiments, fans 919 may generally comprise relatively slow, large diameter cooling fans as compared to fans used in conventional rack configurations. Running larger diameter cooling fans at lower speeds may increase fan lifetime relative to smaller diameter cooling fans running at higher speeds while still providing the same amount of cooling. The sleds are physically shallower than conventional rack dimensions. Further, components are arranged on each sled to reduce thermal shadowing (i.e., not arranged serially in the direction of air flow). As a result, the wider, shallower sleds allow for an increase in device performance because the devices can be operated at a higher thermal envelope (e.g., 250W) due to improved cooling (i.e., no thermal shadowing, more space between devices, more room for larger heat sinks, etc.).

MPCMs 916-1 to 916-7 may be configured to provide inserted sleds with access to power sourced by respective power modules 920-1 to 920-7, each of which may draw power from an external power source 921. In various embodiments, external power source 921 may deliver alternating current (AC) power to rack 902, and power modules 920-1 to 920-7 may be configured to convert such AC power to direct current (DC) power to be sourced to inserted sleds. In some embodiments, for example, power modules 920-1 to 920-7 may be configured to convert 277-volt AC power into 12-volt DC power for provision to inserted sleds via respective MPCMs 916-1 to 916-7. The embodiments are not limited to this example.

MPCMs 916-1 to 916-7 may also be arranged to provide inserted sleds with optical signaling connectivity to a dual-mode optical switching infrastructure 914, which may be the same as - or similar to - dual-mode optical switching infrastructure 514 of FIG. 5. In various embodiments, optical connectors contained in MPCMs 916-1 to 916-7 may be designed to couple with counterpart optical connectors contained in MPCMs of inserted sleds to provide such sleds with optical signaling connectivity to dual-mode optical switching infrastructure 914 via respective lengths of optical cabling 922-1 to 922-7. In some embodiments, each such length of optical cabling may extend from its corresponding MPCM to an optical interconnect loom 923 that is external to the sled spaces of rack 902. In various embodiments, optical interconnect loom 923 may be arranged to pass through a support post or other type of load-bearing element of rack 902. The embodiments are not limited in this context. Because inserted sleds connect to an optical switching infrastructure via MPCMs, the resources typically spent in manually configuring the rack cabling to accommodate a newly inserted sled can be saved.

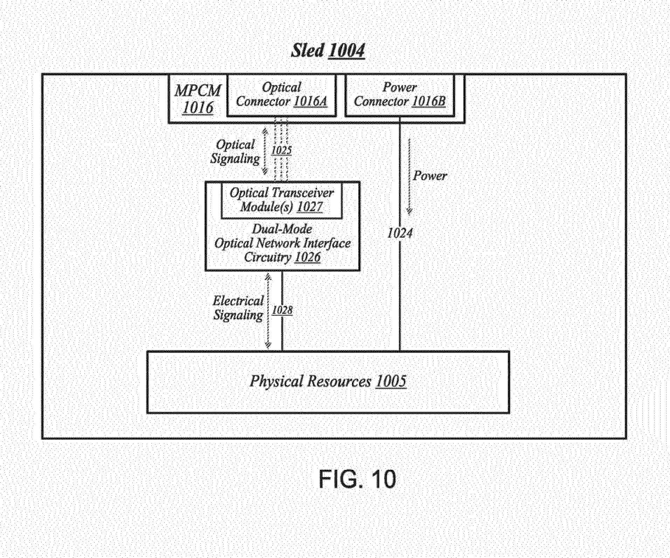

FIG. 10 illustrates an example of a sled 1004 that may be representative of a sled designed for use in conjunction with rack 902 of FIG. 9 according to some embodiments. Sled 1004 may feature an MPCM 1016 that comprises an optical connector 1016A and a power connector 1016B, and that is designed to couple with a counterpart MPCM of a sled space in conjunction with insertion of MPCM 1016 into that sled space. Coupling MPCM 1016 with such a counterpart MPCM may cause power connector 1016 to couple with a power connector comprised in the counterpart MPCM. This may generally enable physical resources 1005 of sled 1004 to source power from an external source, via power connector 1016 and power transmission media 1024 that conductively couples power connector 1016 to physical resources 1005.

Sled 1004 may also include dual-mode optical network interface circuitry 1026. Dual-mode optical network interface circuitry 1026 may generally comprise circuitry that is capable of communicating over optical signaling media according to each of multiple link-layer protocols supported by dual-mode optical switching infrastructure 914 of FIG. 9. In some embodiments, dual-mode optical network interface circuitry 1026 may be capable both of Ethernet protocol communications and of communications according to a second, high-performance protocol. In various embodiments, dual-mode optical network interface circuitry 1026 may include one or more optical transceiver modules 1027, each of which may be capable of transmitting and receiving optical signals over each of one or more optical channels. The embodiments are not limited in this context.

Coupling MPCM 1016 with a counterpart MPCM of a sled space in a given rack may cause optical connector 1016A to couple with an optical connector comprised in the counterpart MPCM. This may generally establish optical connectivity between optical cabling of the sled and dual-mode optical network interface circuitry 1026, via each of a set of optical channels 1025. Dual-mode optical network interface circuitry 1026 may communicate with the physical resources 1005 of sled 1004 via electrical signaling media 1028. In addition to the dimensions of the sleds and arrangement of components on the sleds to provide improved cooling and enable operation at a relatively higher thermal envelope (e.g., 250W), as described above with reference to FIG. 9, in some embodiments, a sled may include one or more additional features to facilitate air cooling, such as a heatpipe and/or heat sinks arranged to dissipate heat generated by physical resources 1005. It is worthy of note that although the example sled 1004 depicted in FIG. 10 does not feature an expansion connector, any given sled that features the design elements of sled 1004 may also feature an expansion connector according to some embodiments. The embodiments are not limited in this context.

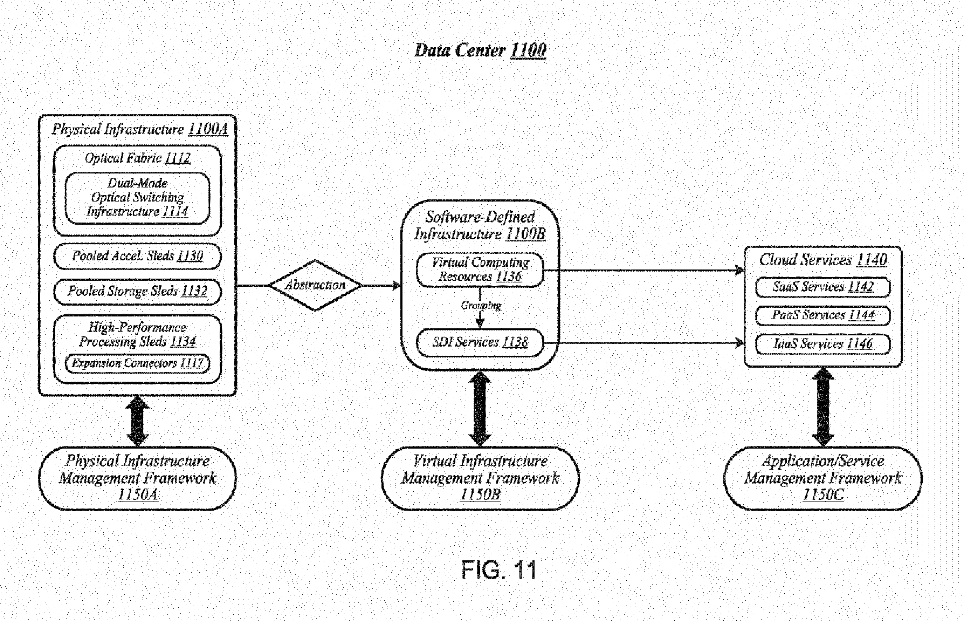

FIG. 11 illustrates an example of a data center 1100 that may generally be representative of one in/for which one or more techniques described herein may be implemented according to various embodiments. As reflected in FIG. 11, a physical infrastructure management framework 1150A may be implemented to facilitate management of a physical infrastructure 1100A of data center 1100. In various embodiments, one function of physical infrastructure management framework 1150A may be to manage automated maintenance functions within data center 1100, such as the use of robotic maintenance equipment to service computing equipment within physical infrastructure 1100A. In some embodiments, physical infrastructure 1100A may feature an advanced telemetry system that performs telemetry reporting that is sufficiently robust to support remote automated management of physical infrastructure 1100A. In various embodiments, telemetry information provided by such an advanced telemetry system may support features such as failure prediction/prevention capabilities and capacity planning capabilities. In some embodiments, physical infrastructure management framework 1150A may also be configured to manage authentication of physical infrastructure components using hardware attestation techniques. For example, robots may verify the authenticity of components before installation by analyzing information collected from a radio frequency identification (RFID) tag associated with each component to be installed. The embodiments are not limited in this context.

As shown in FIG. 11, the physical infrastructure 1100A of data center 1100 may comprise an optical fabric 1112, which may include a dual-mode optical switching infrastructure 1114. Optical fabric 1112 and dual-mode optical switching infrastructure 1114 may be the same as - or similar to - optical fabric 412 of FIG. 4 and dual-mode optical switching infrastructure 514 of FIG. 5, respectively, and may provide high-bandwidth, low-latency, multi-protocol connectivity among sleds of data center 1100. As discussed above, with reference to FIG. 1, in various embodiments, the availability of such connectivity may make it feasible to disaggregate and dynamically pool resources such as accelerators, memory, and storage. In some embodiments, for example, one or more pooled accelerator sleds 1130 may be included among the physical infrastructure 1100A of data center 1100, each of which may comprise a pool of accelerator resources - such as co-processors and/or FPGAs, for example - that is globally accessible to other sleds via optical fabric 1112 and dual-mode optical switching infrastructure 1114.

In another example, in various embodiments, one or more pooled storage sleds 1132 may be included among the physical infrastructure 1100A of data center 1100, each of which may comprise a pool of storage resources that is globally accessible to other sleds via optical fabric 1112 and dual-mode optical switching infrastructure 1114. In some embodiments, such pooled storage sleds 1132 may comprise pools of solid-state storage devices such as solid-state drives (SSDs). In various embodiments, one or more high-performance processing sleds 1134 may be included among the physical infrastructure 1100A of data center 1100. In some embodiments, high-performance processing sleds 1134 may comprise pools of high-performance processors, as well as cooling features that enhance air cooling to yield a higher thermal envelope of up to 250W or more. In various embodiments, any given high-performance processing sled 1134 may feature an expansion connector 1117 that can accept a far memory expansion sled, such that the far memory that is locally available to that high-performance processing sled 1134 is disaggregated from the processors and near memory comprised on that sled. In some embodiments, such a high-performance processing sled 1134 may be configured with far memory using an expansion sled that comprises low-latency SSD storage. The optical infrastructure allows for compute resources on one sled to utilize remote accelerator/FPGA, memory, and/or SSD resources that are disaggregated on a sled located on the same rack or any other rack in the data center. The remote resources can be located one switch jump away or two-switch jumps away in the spine-leaf network architecture described above with reference to FIG. 5. The embodiments are not limited in this context.

In various embodiments, one or more layers of abstraction may be applied to the physical resources of physical infrastructure 1100A in order to define a virtual infrastructure, such as a software-defined infrastructure 1100B. In some embodiments, virtual computing resources 1136 of software-defined infrastructure 1100B may be allocated to support the provision of cloud services 1140. In various embodiments, particular sets of virtual computing resources 1136 may be grouped for provision to cloud services 1140 in the form of SDI services 1138. Examples of cloud services 1140 may include - without limitation - software as a service (SaaS) services 1142, platform as a service (PaaS) services 1144, and infrastructure as a service (IaaS) services 1146.

In some embodiments, management of software-defined infrastructure 1100B may be conducted using a virtual infrastructure management framework 1150B. In various embodiments, virtual infrastructure management framework 1150B may be designed to implement workload fingerprinting techniques and/or machine-learning techniques in conjunction with managing allocation of virtual computing resources 1136 and/or SDI services 1138 to cloud services 1140. In some embodiments, virtual infrastructure management framework 1150B may use/consult telemetry data in conjunction with performing such resource allocation. In various embodiments, an application/service management framework 1150C may be implemented in order to provide QoS management capabilities for cloud services 1140. The embodiments are not limited in this context.

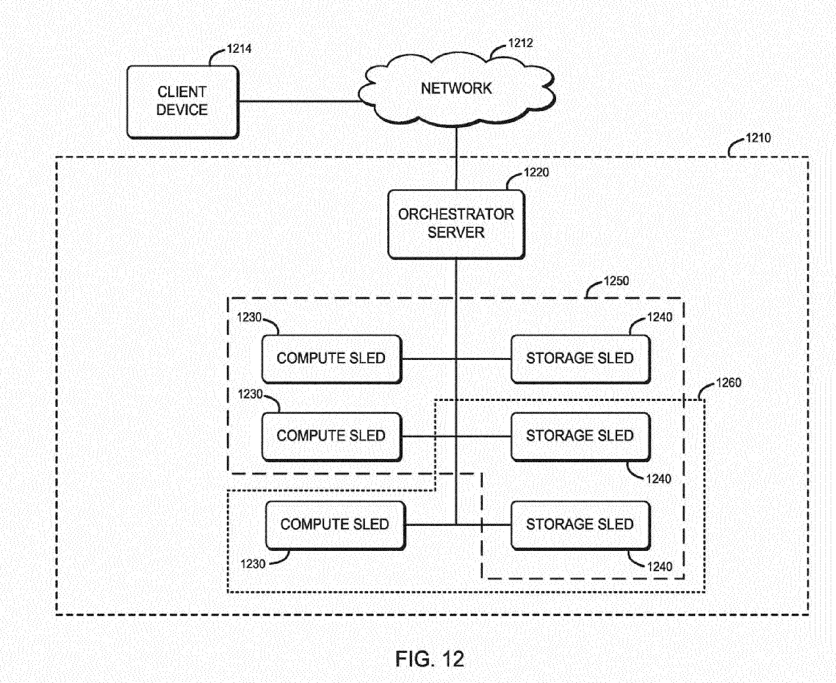

Referring now to FIG. 12, a system 1210, which may be implemented in accordance with the data centers 100, 300, 400, 1100 described above with reference to FIGS. 1, 3, 4, and 11, for optimizing data storage access using proactive notifications of storage device performance includes an orchestrator server 1220 in communication with managed nodes 1250, 1260. Each managed node 1250, 1260 may be embodied as an assembly of resources (e.g., physical resources 206), such as compute resources (e.g., physical compute resources 205-4), storage resources (e.g., physical storage resources 205-1), accelerator resources (e.g., physical accelerator resources 205-2), or other resources (e.g., physical memory resources 205-3) from the same or different sleds (e.g., the sleds 204-1, 204-2, 204-3, 204-4, etc.) or racks (e.g., one or more of racks 302-1 through 302-32). Each managed node 1250, 1260 may be established, defined, or "spun up" by the orchestrator server 1220 at the time a workload is to be assigned to the managed node 1250, 1260 or at any other time, and may exist regardless of whether any workloads are presently assigned to the managed node 1250, 1260. While two managed nodes 1250, 1260 are shown, it should be understood that in other embodiments, the system 1210 may include a different number of managed nodes 1250, 1260 (e.g., tens of thousands). The system 1210 may be located in a data center and provide storage and compute services (e.g., cloud services) to a client device 1214 that is in communication with the system 1210 through a network 1212. The orchestrator server 1220 may support a cloud operating environment, such as OpenStack, and the managed nodes 1250, 1260 may execute one or more applications or processes (i.e., workloads), such as in virtual machines or containers, on behalf of a user of the client device 1214.

In the illustrative embodiment, the managed node 1250 includes two compute sleds 1230 and three storage sleds 1240, and the managed node 1260 includes one compute sled 1230 and two storage sleds 1240. In other embodiments, each managed node 1250, 1260 may include a different number of compute sleds 1230 and storage sleds 1240. In the illustrative embodiment, each storage sled 1240 is configured to proactively monitor, analyze, and detect any performance condition that indicates that the storage sled 1240 is underperforming and/or too overloaded to provide an agreed-upon quality of service (QoS) (e.g., throughput, latency, etc.) for a customer according to a service level agreement (SLA) associated with workloads assigned to the corresponding managed nodes 1250, 1260. As such, rather than consuming network bandwidth to transmit telemetry data indicative of many monitored conditions to another compute device (e.g., to the orchestrator server 1220 or a compute sled 1230) for remote analysis, the storage sleds 1240 locally analyze the telemetry data to detect key indicators (e.g., indicators of conditions that would cause deviations from the agreed-upon QoS goals), take predefined remedial actions to adjust the operations of components on the storage sleds 1240 (e.g., data storage devices) in response to the detection of key indicators, and report the detected key indicators to another compute device (e.g., to the orchestrator server 1220 or to one or more of the compute sleds 1230).

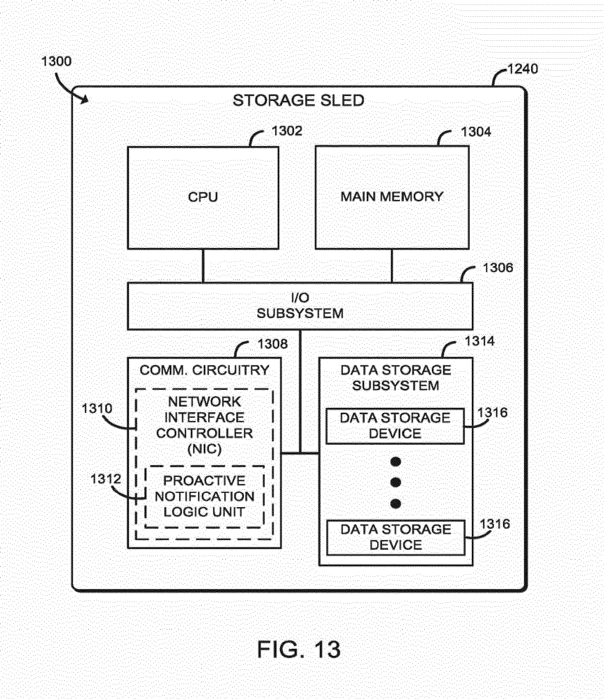

Referring now to FIG. 13, each storage sled 1240 may be embodied as any type of compute device capable of performing the functions described herein. For example, the storage sled 1240 may be embodied as a sled 204-1 with physical storage resources 205-1, a computer, a server, a multiprocessor system, a network appliance (e.g., physical or virtual), a desktop computer, a workstation, a laptop computer, a notebook computer, a processor-based system, or a network appliance. As shown in FIG. 13, the illustrative storage sled 1240 includes a central processing unit (CPU) 1302, a main memory 1304, an input/output (I/O) subsystem 1306, communication circuitry 1308, and a data storage subsystem 1314. It should be appreciated that, in other embodiments, the storage sled 1240 may include other or additional components, such as those commonly found in a computer (e.g., display, peripheral devices, etc.). Additionally, in some embodiments, one or more of the illustrative components may be incorporated in, or otherwise form a portion of, another component. For example, in some embodiments, the main memory 1304, or portions thereof, may be incorporated in the CPU 1302.

The CPU 1302 may be embodied as any type of processor capable of performing the functions described herein. The CPU 1302 may be embodied as a single or multi-core processor(s), a microcontroller, or other processor or processing/controlling circuit. In some embodiments, the CPU 1302 may be embodied as, include, or be coupled to a field programmable gate array (FPGA), an application specific integrated circuit (ASIC), reconfigurable hardware or hardware circuitry, or other specialized hardware to facilitate performance of the functions described herein. Similarly, the main memory 1304 may be embodied as any type of volatile (e.g., dynamic random access memory (DRAM), etc.) or non-volatile memory or data storage capable of performing the functions described herein. In some embodiments, all or a portion of the main memory 1304 may be integrated into the CPU 1302. In operation, the main memory 1304 may store various software and data used during operation such as telemetry data, key indicator data, remedial action data, operating systems, applications, programs, libraries, and drivers.

The I/O subsystem 1306 may be embodied as circuitry and/or components to facilitate input/output operations with the CPU 1302, the main memory 1304, and other components of the storage sled 1240. For example, the I/O subsystem 1306 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 1306 may form a portion of a system-on-a-chip (SoC) and be incorporated, along with one or more of the CPU 1302, the main memory 1304, and other components of the storage sled 1240, on a single integrated circuit chip.

The communication circuitry 1308 may be embodied as any communication circuit, device, or collection thereof, capable of enabling communications between the storage sled 1240 and another compute device (e.g., the orchestrator server 1220, a compute sled 1230, and/or the client device 1214 over the network 1212). The communication circuitry 1308 may be configured to use any one or more communication technology (e.g., wired or wireless communications) and associated protocols (e.g., Ethernet, Bluetooth^{®}, Wi-Fi^{®}, WiMAX, etc.) to effect such communication.

The illustrative communication circuitry 1308 may include a network interface controller (NIC) 1310, which may also be referred to as a storage fabric interface (SFI). The NIC 1310 may be embodied as one or more add-in-boards, daughtercards, network interface cards, controller chips, chipsets, or other devices that may be used by the storage sled 1240 to connect with another compute device (e.g., the orchestrator server 1220, a compute sled 1230, and/or the client device 1214). In some embodiments, the NIC 1310 may be embodied as part of a system-on-a-chip (SoC) that includes one or more processors, or included on a multichip package that also contains one or more processors. In some embodiments, the NIC 1310 may include a local processor (not shown) and/or a local memory (not shown) that are both local to the NIC 1310. In such embodiments, the local processor of the NIC 1310 may be capable of performing one or more of the functions of the CPU 1302 described herein. Additionally or alternatively, in such embodiments, the local memory of the NIC 1310 may be integrated into one or more components of the storage sled 1240 at the board level, socket level, chip level, and/or other levels.

The NIC 1310 may further include a proactive notification logic unit 1312 which may be embodied as any device or circuitry capable of proactively monitoring and analyzing telemetry data to detect a performance condition that indicates that the storage sled 1240 is underperforming and/or overloaded. For example, the proactive notification logic unit 1312 may be embodied as a co-processor, embedded circuit, ASIC, FPGA, and/or other specialized circuitry. The proactive notification logic unit 1312 may receive key indicator data from a requestor device 1510 for identifying key indicators indicative of one or more performance conditions that satisfy predefined thresholds. The proactive notification logic unit 1312 may also receive remedial action data indicative of remedial actions to be performed by the proactive notification logic unit 1312 in response to satisfaction of one of the key indicators identified in the received key indicator data. Based on the key indicator data, the proactive notification logic unit 1312 may further analyze telemetry data to identify one of the key indicators. In response to identifying a key indicator, the proactive notification logic unit 1312 may perform a remedial action to counter the predefined condition that corresponds to the key indicator and may notify the orchestrator server 1220 and/or one or more compute sleds 1230.

The data storage subsystem 1314 further includes a plurality of data storage devices 1316, which may be embodied as any type of devices configured for short-term or long-term storage of data such as, for example, memory devices and circuits, memory cards, hard disk drives, solid-state drives, or other data storage devices. Each data storage device 1316 may include a system partition that stores data and firmware code for the data storage device 1316. Each data storage device 1316 may also include an operating system partition that stores data files and executables for an operating system.

Additionally or alternatively, the storage sled 1240 may include one or more peripheral devices. Such peripheral devices may include any type of peripheral device commonly found in a compute device such as a display, speakers, a mouse, a keyboard, and/or other input/output devices, interface devices, and/or other peripheral devices.

The client device 1214, the orchestrator server 1220, and the compute sleds 1230 may have components similar to those described in FIG. 13. The description of those components of the storage sled 1240 is equally applicable to the description of components of the client device 1214, the orchestrator server 1220, and the compute sleds 1230 and is not repeated herein for clarity of the description. Further, it should be appreciated that any of the client device 1214, the orchestrator server 1220, and the compute sleds 1230 may include other components, sub-components, and devices commonly found in a computing device, which are not discussed above in reference to the storage sled 1240 and not discussed herein for clarity of the description. As described herein, the orchestrator server 1220 and/or any other compute device in the system 1210 (e.g., a compute sled 1230) executing an orchestration software stack may operate as a "requestor device" to issue requests to a storage sled 1240 to perform data access operations and respond to proactive notifications of key indicators from the storage sled 1230.

As described above, the client device 1214, the orchestrator server 1220 and the components of the managed nodes 1250, 1260 (e.g., the compute sleds 1230 and the storage sleds 1240) are illustratively in communication via the network 1212, which may be embodied as any type of wired or wireless communication network, including global networks (e.g., the Internet), local area networks (LANs) or wide area networks (WANs), cellular networks (e.g., Global System for Mobile Communications (GSM), 3G, Long Term Evolution (LTE), Worldwide Interoperability for Microwave Access (WiMAX), etc.), digital subscriber line (DSL) networks, cable networks (e.g., coaxial networks, fiber networks, etc.), or any combination thereof.

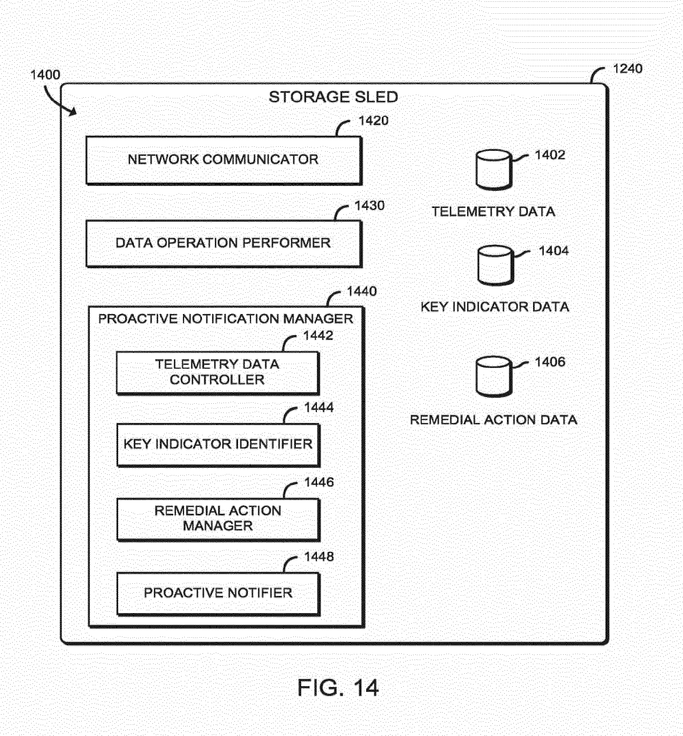

Referring now to FIG. 14, in the illustrative embodiment, each storage sled 1240 may establish an environment 1400 during operation. The illustrative environment 1400 includes a network communicator 1420, a data operation performer 1430, and a proactive notification manager 1440. The proactive notification manager 1440 further includes a telemetry data controller 1442, a key indicator identifier 1444, a remedial action manager 1446, and a proactive notifier 1448. Each of the components of the environment 1400 may be embodied as hardware, firmware, software, or a combination thereof. As such, in some embodiments, one or more of the components of the environment 1400 may be embodied as circuitry or a collection of electrical devices (e.g., network communicator circuitry 1420, data operation performer circuitry 1430, proactive notification manager circuitry 1440, telemetry data controller circuitry 1442, key indicator identifier circuitry 1444, remedial action manager circuitry 1446, proactive notifier circuitry 1448, etc). It should be appreciated that, in such embodiments, one or more of the network communicator circuitry 1420, the data operation performer circuitry 1430, the proactive notification manager circuitry 1440, the telemetry data controller circuitry 1442, the key indicator identifier circuitry 1444, the remedial action manager circuitry 1446, or the proactive notifier circuitry 1448 may form a portion of one or more of the CPU 1302, the main memory 1304, the I/O subsystem 1306, the proactive notification logic unit 1312, the data storage subsystem 1314, and/or other components of the storage sled 1240.

In the illustrative environment 1400, the network communicator 1420, which may be embodied as hardware, firmware, software, virtualized hardware, emulated architecture, and/or a combination thereof as discussed above, is configured to facilitate inbound and outbound network communications (e.g., network traffic, network packets, network flows, etc.) to and from the storage sled 1240, respectively. To do so, the network communicator 1420 is configured to receive and process data packets from one system or computing device (e.g., the orchestrator server 1220, a compute sled 1230, etc.) and to prepare and send data packets to a system or computing device (e.g., the orchestrator server 1220, a compute sled 1230, etc.). Accordingly, in some embodiments, at least a portion of the functionality of the network communicator 1420 may be performed by the communication circuitry 1308, and, in the illustrative embodiment, by the NIC (e.g., an SFI) 1310.

The data operation performer 1430, which may be embodied as hardware, firmware, software, virtualized hardware, emulated architecture, and/or a combination thereof as discussed above, is configured to perform data access operation in response to a data access request requested from a requestor device (e.g., the orchestrator server 1220 and/or a compute sled 1230).

The proactive notification manager 1440, which may be embodied as hardware, firmware, software, virtualized hardware, emulated architecture, and/or a combination thereof as discussed above, is configured to proactively monitor and analyze telemetry data to detect a performance condition that indicates that the storage sled 1240 is underperforming and/or overloaded and send a notification of a detection of a key indicator to one or more remote compute devices (i.e., the orchestrator server 1220 and/or one or more compute sleds 1230 executing one or more applications that uses the storage sled 1240). To do so, as discussed above, the proactive notification manager 1440 includes the telemetry data controller 1442, the key indicator identifier 1444, the remedial action manager 1446, and the proactive notifier 1448.

The telemetry data controller 1442 is configured to obtain telemetry data from the data storage devices 1316 in response to receiving a data access request and store telemetry data to the telemetry data database 1402. The telemetry data database 1402 includes data produced by the components (e.g., the data storage devices 1316, the processor, the NIC 1310) during operation of the storage sled 1240. For example, the data may include latency to perform data operations, a backlog of received requests, and/or a log of storage device errors. In the illustrative embodiment, the telemetry data may be generated by the data storage devices 1316 as the data storage devices 1316 perform data access operations in response to requests communicated through a Non-Volatile Memory Express over Fabric (NVMe over Fabric) interface. Non-Volatile Memory Express (NVMe) is a logical device interface (http://www.nvmexpress.org) for accessing non-volatile storage media attached via a Peripheral Component Interconnect Express (PCIe) bus (http://www.pcsig.com). The non-volatile storage media may comprise a flash memory and solid solid-state drives (SSDs). NVMe is designed for accessing low latency storage devices in computer systems, including personal and enterprise computer systems, and is also deployed in data centers requiring scaling of thousands of low latency storage devices. NVMe over Fabrics is an interface for communicating NVMe requests and responses over a fabric (e.g., a network).

The key indicator identifier 1444 is configured to analyze the telemetry data and identify one or more key indicators that indicate one or more performance conditions that satisfy a corresponding predefined threshold. Specifically, in the illustrative embodiments, the key indicator identifier 1444 is configured to obtain key indicator data from a requestor device 1510 (e.g., the orchestrator server 1220 or a compute sled 1230). As discussed below, the key indicator data may be embodied as any data indicative of performance conditions (e.g., latency to perform a data read or write, average number of operations per second, etc.) and associated predefined thresholds (e.g., a threshold latency, a threshold number of operations per second, etc.) that, if satisfied, indicate a performance problem (e.g., that a data storage device is responding too slowly). The received key indicator data is stored in the key indicator data database 1404. The key indicator identifier 1444 is further configured to analyze the telemetry data stored in the telemetry data database 1402 to identify the presence of one or more key indicators based on the key indicator data. The key indicator data may vary from one workload to the next and may be defined in accordance with a service level agreement associated with each workload.

The remedial action manager 1446 is configured to manage the predefined remedial actions and store the predefined remedial actions in the remedial action data database 1406. The remedial actions are the actions to be performed by the storage sled 1240 in response to the detection of a key indicator in the telemetry data. It should be appreciated that the predefined remedial action may be performed locally at the storage sled 1240 or remotely outside of the storage sled 1240, such as one of the compute sleds 1230 or the orchestrator server 1220. In the illustrative embodiment, the remedial action manager 1446 is configured to obtain remedial action data from a requestor device 1510. In some embodiments, the remedial action manager 1446 of the storage sled 1240 may determine, using local policies and goals, predefined remedial actions that are not defined in the remedial action data received from the requestor device 1510. The remedial action manager 1446 is configured to store the remedial actions in the remedial action data database 1406. Similar to the key indicator data, the remedial action data may also vary from workload to workload.

The proactive notifier 1448 is configured to determine which remote compute devices (i.e., the orchestrator server 1220 and/or one or more compute sleds 1230 executing one or more applications that uses the storage sled 1240) to send a notification of a detection of a key indicator to, and send the notification to the determined remote compute device(s).

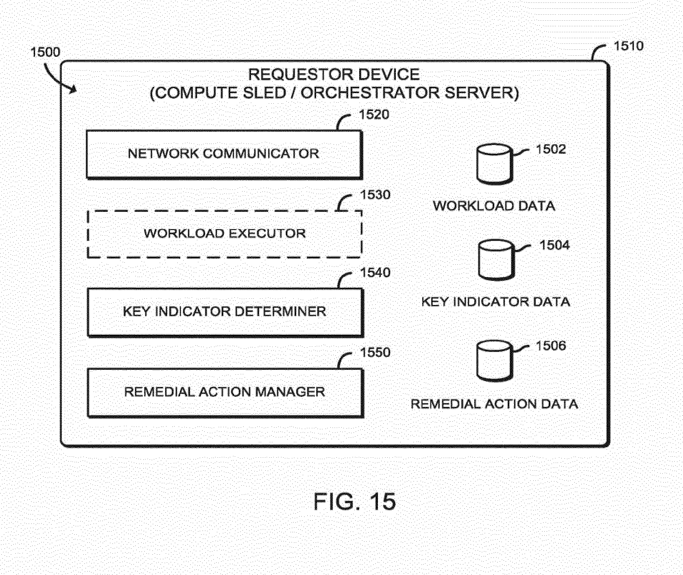

Referring now to FIG. 15, in the illustrative embodiment, a requestor device 1510 (e.g., a compute device, such as the orchestrator server 1220 or a compute sled 1230, that may request the data storage sled 1240 to perform a data operation), may establish an environment 1500 during operation. The illustrative environment 1500 includes a network communicator 1520, a key indicator determiner 1540, and a remedial action manager 1550. If the requestor device 1510 is embodied as a compute sled 1230, the environment 1500 may further include a workload executor 1530. Each of the components of the environment 1500 may be embodied as hardware, firmware, software, or a combination thereof. As such, in some embodiments, one or more of the components of the environment 1500 may be embodied as circuitry or a collection of electrical devices (e.g., network communicator circuitry 1520, workload executor circuitry 1530, key indicator determiner circuitry 1540, remedial action manager circuitry 1550, etc). It should be appreciated that, in such embodiments, one or more of the network communicator circuitry 1520, the workload executor circuitry 1530, the key indicator determiner circuitry 1540, or the remedial action manager circuitry 1550 may form a portion of one or more of components of the requestor device 1510.

In the illustrative environment 1500, the network communicator 1520, which may be embodied as hardware, firmware, software, virtualized hardware, emulated architecture, and/or a combination thereof as discussed above, is configured to facilitate inbound and outbound network communications (e.g., network traffic, network packets, network flows, etc.) to and from the requestor device 1510, respectively. To do so, the network communicator 1520 is configured to receive and process data packets from one system or computing device (e.g., the storage sled 1240) and to prepare and send data packets to a system or computing device (e.g., the storage sled 1240). Accordingly, in some embodiments, at least a portion of the functionality of the network communicator 1520 may be performed by a communication circuitry and/or a NIC (e.g., a host fabric interface (HFI)) of the requestor device 1510.

In the embodiments in which the requestor device 1510 is a compute sled 1230, the environment 1500 further includes the workload executor 1530, which may be embodied as hardware, firmware, software, virtualized hardware, emulated architecture, and/or a combination thereof as discussed above, and is configured to execute workloads. Workloads are represented in workload data 1502. The workload data 1502, in the illustrative embodiment, may be embodied as any data indicative of a service level agreement (SLA) for each workload and information indicative of which components of which managed nodes 1250, 1260 (e.g., which compute sleds 1230 and storage sleds 1240) are being used to execute the workloads.

The key indicator determiner 1540 is configured to determine one or more key indicators that indicate one or more performance conditions that satisfy a corresponding predefined threshold. In the illustrative embodiment, the key indicator determiner 1540 determines the key indicators based on an agreed-upon quality of service (e.g., throughput, latency, etc.) for a customer according to a service level agreement (SLA) associated with one or more workloads. The determined key indicators are then stored in key indicator data 1504. As discussed in detail below, the key indicators are sent to the storage sled 1240 to be used to analyze telemetry data to identify the presence of one or more key indicators.

The remedial action manager 1550 is configured to determine one or more remedial actions and store the predefined remedial actions in remedial action data 1506. As discussed above, the remedial actions are the actions to be performed by the storage sled 1240 in response to satisfaction of one of the key indicators. In the illustrative embodiment, the remedial action manager 1550 is configured to determine the remedial actions associated with the key indicators based on an agreed-upon quality of service (e.g., throughput, latency, etc.) for a customer according to a service level agreement (SLA) associated with workloads.

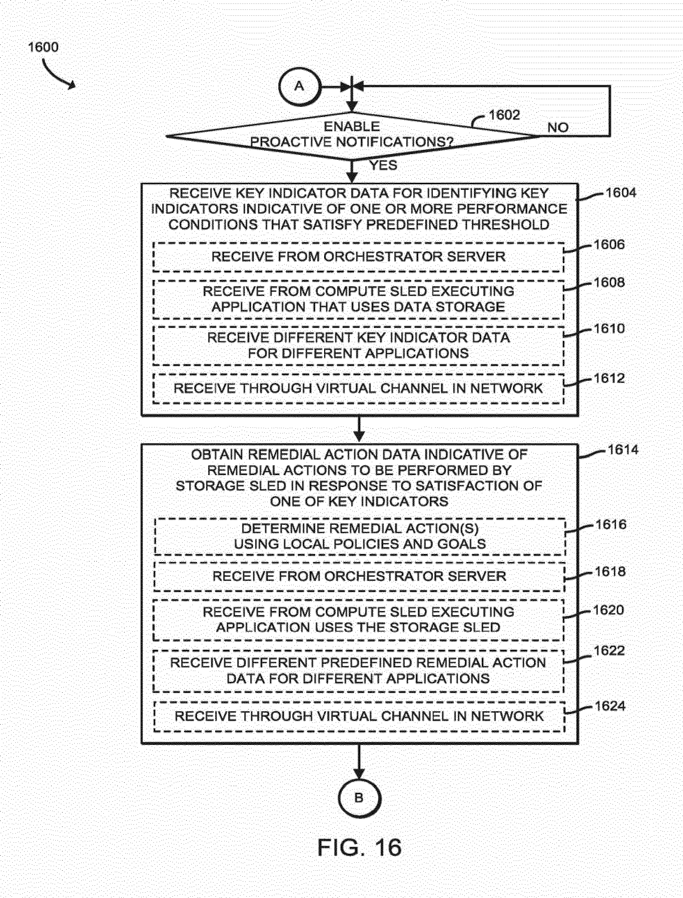

Referring now to FIGS. 16-19, in use, the storage sled 1240 may execute a method 1600 for producing proactive notifications. In producing proactive notifications, the storage sled 1240 proactively monitors telemetry data received from one or more data storage devices 1316 as the storage devices 1316 perform operations in response to data access requests, to identify one or more key indicators that indicate unsatisfactory performance conditions of the storage sled 1240, such as underperformance and/or overload. The method 1600 begins with block 1602 in which the storage sled 1240 determines whether to enable proactive notifications. In some embodiments, the storage sled 1240 may determine to enable proactive notifications in response to determining that the proactive notification logic unit 1312 is present, in response to a determination that a setting stored in a configuration file in the data storage subsystem 1314 indicates to perform proactive notifications, and/or as a function of other criteria.

Regardless, in response to a determination to enable proactive notifications, the method 1600 advances to block 1604 in which the storage sled 1240 receives key indicator data for identifying key indicators indicative of one or more performance conditions that satisfy predefined thresholds. For example, in some embodiments, each key indicator may correspond to a performance condition that satisfies a predefined threshold which suggests that the performance condition is either underperforming or overloaded. To do so, the storage sled 1240 receives the key indicator data from the requestor device 1510. For example, in some embodiments, the storage sled 1240 may receive the key indicator data from the orchestrator server 1220 as indicated in block 1606. Additionally or alternatively, in some embodiments, the storage sled 1240 may receive the key indicator data from a compute sled 1230 executing an application that uses the data storage of the storage sled 1240, as indicated in block 1608. As indicated in block 1610, the storage sled 1240 may receive different key indicator data for different applications. For example, each application may be particularly affected by different performance conditions (e.g., write operations per second, read operations per second, etc.), and as such, may have thresholds set for different performance conditions. It should be appreciated that, in some embodiments, the storage sled 1240 may receive the key indicator data through a virtual channel in the network 1212 as indicated in block 1612.

In block 1614, in the illustrative embodiment, the storage sled 1240 obtains remedial action data indicative of remedial actions to be performed by the storage sled 1240 in response to satisfaction of one of the key indicators identified in the received key indicator data. In some embodiments, in response to receiving the key indicator data, the storage sled 1240 may determine one or more remedial actions based on policies and goals registered with the storage sled 1240, as indicated in block 1616. Additionally or alternatively, the storage sled 1240 may receive remedial action data from a requestor device 1510. For example, in some embodiments, the storage sled 1240 may receive the remedial action data from the orchestrator server 1220 as indicated in block 1618 and/or the storage sled 1240 may receive the remedial action data from a compute sled 1230 executing an application that uses the data storage of the storage sled 1240, as indicated in block 1620. As indicated in block 1622, the storage sled 1240 may receive different predefined remedial action data for different applications. It should be appreciated that, in some embodiments, the storage sled 1240 may receive the remedial action data through a virtual channel in the network 1212 as indicated in block 1624.

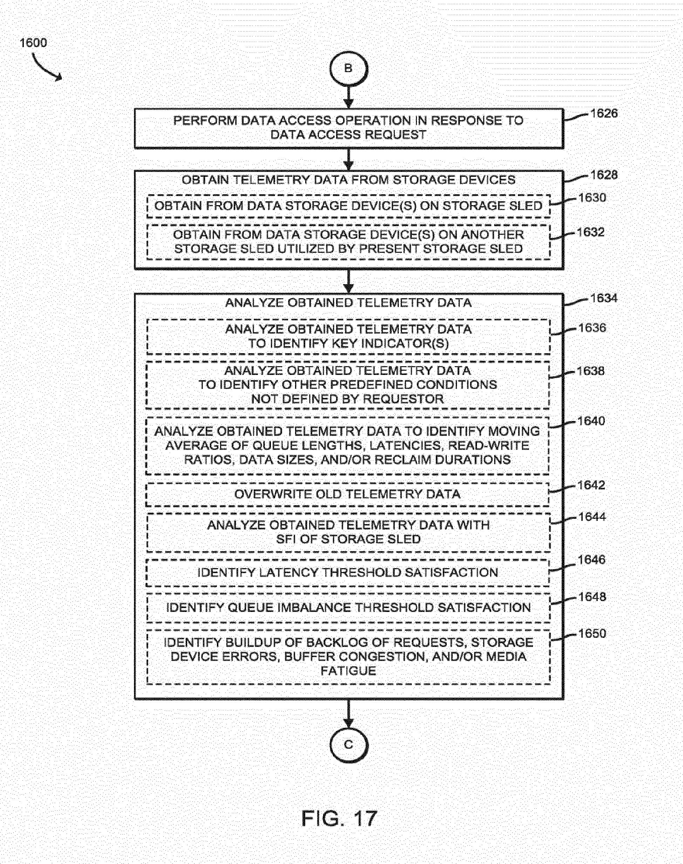

Subsequently, the method 1600 advances to block 1626 in FIG. 17, in which the storage sled 1240 performs a data access operation in response to receiving a data access request from the requestor device 1510 (e.g., reading data and/or writing data). In block 1628, the storage sled 1240 obtains telemetry data from one or more storage devices 1316. To do so, in some embodiments, the storage sled 1240 may obtain the telemetry data from the data storage device(s) 1316 on the present storage sled 1240 as indicated in block 1630. Additionally or alternatively, in some embodiments, the storage sled 1240 may obtain the telemetry data from the data storage device(s) 1316 on another storage sled 1240 utilized by the present storage sled 1240 as indicated in block 1632. In other words, in some embodiments, the present storage sled 1240 may communicate with one or more secondary storage sleds 1240 to utilize the data storage devices 1316 of the secondary storage sled(s) 1240 to satisfy the performance conditions required in the service level agreements for the workloads.

In block 1634, subsequent to obtaining the telemetry data, the storage sled 1240 analyzes the obtained telemetry data. In doing so, in some embodiments, the storage sled 1240 may analyze the obtained telemetry data to identify one or more key indicators as indicated in block 1636. Additionally or alternatively, in some embodiments, in block 1638, the storage sled 1240 analyzes the obtained telemetry data to identify other predefined conditions that are not defined by the requestor device 1510. For example, the storage sled 1240 may include its own set of predefined conditions and thresholds. In such embodiments, the storage sled 1240 may proactively detect a predefined condition that satisfies the corresponding threshold stored locally in the storage sled 1240 without being requested by the requestor device 1510. As indicated in block 1640, in some embodiments, the storage sled 1240 may analyze the obtained telemetry data to identify one or more of a moving average of queue lengths, latencies, read-write ratios, data sizes, and reclaim durations. In some embodiments, in block 1642, the storage sled 1240 may overwrite old telemetry data with new telemetry data (e.g., in a circular buffer of telemetry data).

In block 1644, the storage sled 1240 may analyze the obtained telemetry data with the storage fabric interface (SFI) of the storage sled 1240. As described above, the storage fabric interface (SFI) is used to communicate with the host fabric interface (HFI) of the compute sled 1230. In some embodiments, one or more dedicated virtual channels may be formed between the storage fabric interface (SFI) and the host fabric interface (HFI) to stream the data (e.g., proactive notification data) from the storage fabric interface (SFI) to the host fabric interface (HFI).

As indicated in block 1646, the storage sled 1240 may analyze the obtained telemetry data to identify a latency threshold satisfaction (e.g., a measured latency that is equal to or greater than a threshold latency). Additionally or alternatively, in some embodiments, in block 1648, the storage sled 1240 may analyze the obtained telemetry data to identify a queue imbalance threshold satisfaction. For example, when the present storage sled 1240 utilizes one or more secondary storage sleds 1240, the storage sled 1240 may determine a ratio between the data access request mapped in the data storage devices 1316 of the present storage sled 1240 and the data access request mapped in the data storage devices 1316 of the secondary storage sled(s) 1240. In some embodiments, as indicated in block 1650, the storage sled 1240 may further analyze the obtained telemetry data to identify one or more of a buildup of a backlog of requests (e.g., data access requests), storage device errors, buffer congestion, or media fatigue, to determine whether the storage sled 1240 is overloaded or underperforming (e.g., exhibiting a corresponding key indicator).

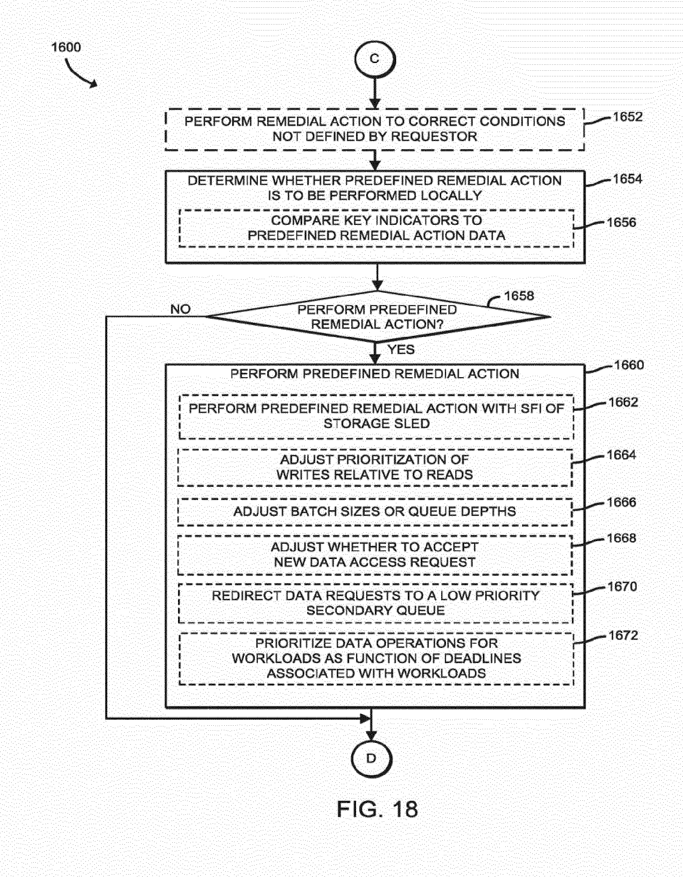

Subsequently, in some embodiments, the method 1600 may advance to block 1652 of FIG. 18, in which the storage sled 1240 may perform a remedial action to correct conditions not defined by the requestor device 1510. For example, as described in block 1638, in some embodiments, the storage sled 1240 may analyze the obtained telemetry data to identify other predefined condition(s) that are not defined by the requestor device 1510 (e.g., low level storage media errors, such as the detection of faulty memory cells). In response to identifying a predefined condition not defined by the requestor device 1510, the storage sled 1240 may perform a predefined remedial action that corresponds to the predefined condition identified by the storage sled 1240 to correct the identified predefined condition of the storage sled 1240 (e.g., moving data from faulty memory cells to non-faulty memory cells). Additionally or alternatively, as discussed above, in some embodiments, the storage sled 1240 may determine remedial actions that are not defined by the requestor device 1510 using the local policies and goals as indicated in block 1614. In such embodiments, the storage sled 1240 may perform the remedial actions determined by the storage sled 1240 based on the local policies and goals to correct the conditions identified by the storage sled 1240.

The method 1600 advances to block 1654, in which the storage sled 1240 determines whether the predefined remedial action is to be performed locally at the storage sled 1240. As described above, the predefined remedial action may be performed locally at the storage sled 1240 or remotely outside of the storage sled 1240, such as by one of the compute sleds 1230 or the orchestrator server 1220. To determine whether the predefined remedial action is to be performed locally, the storage sled 1240 may compare one or more key indicators of the obtained key indicator data to the predefined remedial action data, as indicated in block 1656. In other words, subsequent to detecting one or more key indicators in the obtained telemetry data, the storage sled 1240 compares each detected key indicator to the predefined remedial actions to determine the remedial action that corresponds to the detected key indicator and determines whether the corresponding remedial action is to be performed locally by the storage sled 1240.

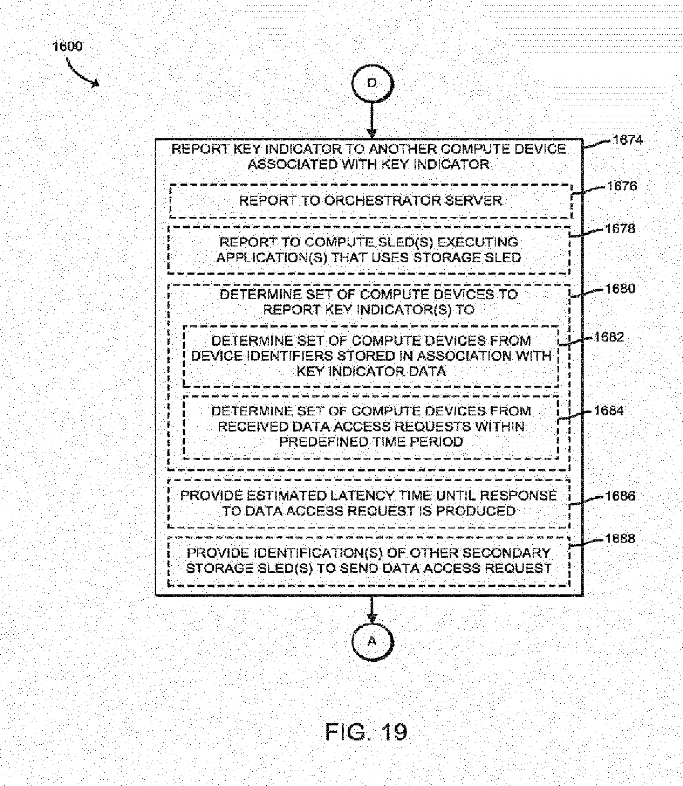

Subsequently, in block 1658, the storage sled 1240 determines whether to perform the predefined remedial action by the storage sled 1240. If the storage sled 1240 determines that the predefined remedial action is not to be performed by the storage sled 1240, the method 1600 skips ahead to block 1674 of FIG. 19. However, if the storage sled 1240 determines that the predefined remedial action is to be performed by the storage sled 1240, the method 1600 advances to block 1660.

In block 1660, the storage sled 1240 performs the predefined remedial action. In some embodiments, the storage sled 1240 may perform the predefined remedial action with the storage fabric interface (SFI) of the storage sled 1240 as indicated in block 1662. In some embodiments, the predefined remedial action that is being performed by the storage sled 1240 may include adjusting a prioritization of writes relative to reads as indicated in block 1664, the batch sizes or queue depths as indicated in block 1666, whether to accept a new data access request as indicated in block 1668, and/or redirecting data requests to a low priority secondary queue, as indicated in block 1670, to counter the predefined condition(s). In some embodiments, the storage sled 1240 may prioritize data operations for workloads as a function of deadliness associated with the workloads, as indicated in block 1672. For example, the storage sled 1240 may shuffle the data operations for workloads in a queue to perform the data operation that has the earliest deadline first.

Subsequently, the method 1600 advances to block 1674 of FIG. 19, in which the storage sled 1240 reports the key indicator(s) identified in block 1634 to one or more other compute device(s) associated with the key indicator(s). For example, in some embodiments, the storage sled 1240 may report the key indicator(s) to the orchestrator server 1220 as indicated in block 1676. Additionally or alternatively, the storage sled 1240 may report the key indicator(s) to the one or more compute sleds 1230 executing one or more applications that use the present storage sled 1240, as indicated in block 1678. Additionally or alternatively, the storage sled 1240 may report the key indicator(s) to any other sled accessing the storage (e.g., an accelerator sled 1130).

In some embodiments, the storage sled 1240 may determine a set of compute devices to report the key indicator(s) to, as indicated in block 1680. For example, in block 1682, in some embodiments, the storage sled 1240 may determine the set of compute devices from device identifiers stored in association with the key indicator data. Additionally or alternatively, in some embodiments, the storage sled 1240 may determine the set of compute devices from the received data access requests within the predefined time period as indicated in block 1684.

In some embodiments, in block 1686, in response to determining a compute device associated with the key indicator, the storage sled 1240 may provide the compute device an estimated latency time until a response to a data access request is produced. In other embodiments, in response to determining a compute device associated with the key indicator, the storage sled 1240 may provide the compute device an identification(s) of other secondary storage sled(s) 1240 to send data access requests to (e.g., to lessen the load on the present storage sled 1240), as indicated in block 1688. Subsequently, the method 1600 loops back to block 1602 of FIG. 16, in which the storage sled 1240 determines whether to continue to enable proactive notifications.

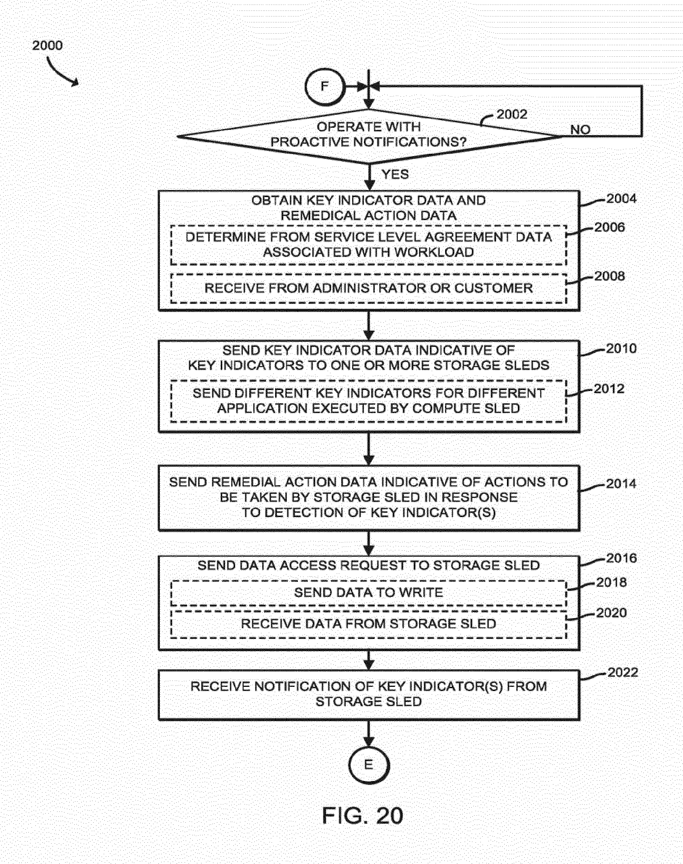

Referring now to FIGS. 20-21, in use, the requestor device 1510 may execute a method 2000 for operating with proactive notifications. The method 2000 begins with block 2002 in which the requestor device 1510 determines whether to operate with proactive notifications. As discussed above, the requestor device 1510 may be the orchestrator server 1220 or the compute sled 1230. The requestor device 1510 may determine to operate with proactive notifications in response to determining that the requestor device 1510 is communicatively coupled to one or more storage sleds 1240 that are capable of providing proactive notifications, in response to a request from an administrator compute device to do so, and/or based on other criteria. Regardless, if the requestor device 1510 determines to operate with proactive notifications, the method 2000 advances to block 2004.

In block 2004, the requestor device 1510 obtains key indicator data and remedial action data. To do so, the requestor device 1510 may determine the key indicator data and the remedial action data from service level agreement data associated with a workload, as indicated in block 2006. In some embodiments, in block 2008, the requestor device 1510 may determine the key indicator data and the remedial action data from an administrator or a customer (e.g., by receiving the key indicator data and the remedial data from an administrator compute device or a customer compute device, such as the client device 1214).

In block 2010, the requestor device 1510 sends the key indicator data indicative of key indicators to a storage sled 1240. In doing so, the requestor device 1510 may send different key indicators for different applications executed by a compute sled 1230 that uses the storage sled 1240 (e.g., to write and/or read data), as indicated in block 2012.

In block 2014, the requestor device 1510 sends, to the storage sled 1240, the remedial action data indicative of actions to be taken by the storage sled 1240 in response to a detection of one or more key indicators.

In block 2016, the requestor device 1510 sends a data access request to a storage sled 1240. For example, the requestor device 1510 may send data to write as indicated in block 2018. Alternatively, the requestor device 1510 may request data from the storage sled 1240 as indicated in block 2020.

In block 2022, the requestor device 1510 receives a notification of one or more key indicators from the storage sled 1240.

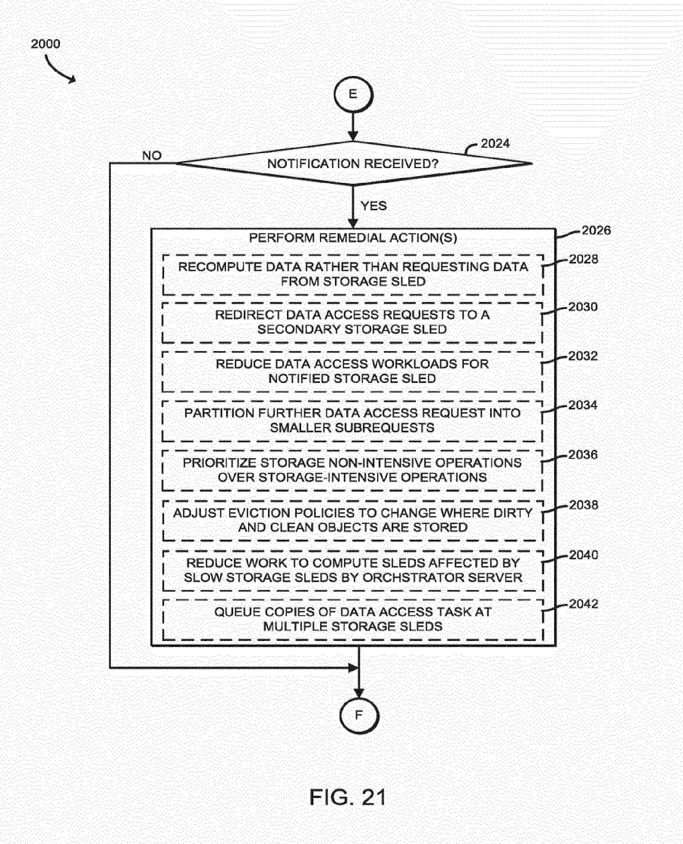

Subsequently, the method 2000 advances to block 2024 of FIG. 21, in which the requestor device 1510 determines whether a notification of a key indicator has been received from the storage sled 1240. If a notification of a key indicator has not been received (e.g., a predefined condition that satisfies the predefined threshold has not been detected by the storage sled 1240), the method 2000 loops back to block 2002, in which the requestor device 1510 determines whether to continue to operate with proactive notifications.

If, however, the requestor device 1510 determines that the key notification has been received from the storage sled 1240, the requestor device 1510 advances to block 2026. In block 2026, the requestor device 1510 performs a corresponding remedial action. For example, in some embodiments, the requestor device 1510 may recompute data (e.g., a previously stored result of a calculation) rather than requesting the data from a storage sled 1240, as indicated in block 2028. In block 2030, the requestor device 1510 may redirect future data access requests to a secondary storage sled 1240 different than the notifying storage sled 1230 (e.g., the storage sled 1230 that sent the notification of the key indicator). In some embodiments, the requestor device 1510 may reduce data access workloads for the notifying storage sled 1240, as indicated in block 2032. For example, if the received notification indicates that the notifying storage sled 1240 is being overloaded, the requestor device 1510 may reduce data access workloads for the notifying storage sled 1240 or redirect future data access requests to the secondary storage sled 1240.

In block 2034, the requestor device 1510 may partition further the data access requests into smaller sub-requests, which may be distributed to multiple storage sleds 1240. In block 2036, the requestor device 1510 may prioritize storage non-intensive operations over storage-intensive operations. In some embodiments, in block 2038, the requestor device 1510 may adjust eviction policies to change where dirty and clean objects are stored.

In some embodiments, in block 2040, if the requestor device 1510 is embodied as the orchestrator server 1220, the orchestrator server 1220 may reduce workloads to (e.g., reassign workloads away from) the compute sleds 1230 affected by slow storage sleds 1240.

As indicated in block 2042, the requestor device 1510 may queue copies of the same data access task at multiple storage sleds 1240. For example, the requestor device 1510 may send the same request to perform a data access operation to multiple storage sleds 1240 under periods of bursty activity and, in response to receiving an acknowledgement that the requested data access operation is being performed by one of the storage sleds 1240, the requestor device 1510 may cancel the data access operation assigned to the other storage sleds 1240.

## Claims

1. A compute device (204-1, 1240) for producing proactive notifications of data storage performance, the compute device comprising:
one or more data storage devices (1316);
one or more processors (1302); and
one or more memory devices (1304) having stored therein a plurality of instructions that, when executed by the one or more processors, cause the compute device to:
obtain (1604) key indicator data indicative of a performance condition associated with operations of the one or more data storage devices and an associated predefined threshold that, if satisfied, indicates the presence of a key indicator;
obtain (1614) remedial action data indicative of a remedial action to be performed by the compute device in response to identification of the key indicator in telemetry data produced by the compute device during operation;
analyze (1634) said telemetry data, produced by the compute device during operation, to determine whether the key indicator is present in the telemetry data;
perform (1660), in response to a determination that the key indicator is present, the predefined remedial action; and
send (1674) a notification of the key indicator to a remote compute device.

2. The compute device of claim 1, further comprising a network interface controller to communicate with a host fabric interface of the remote compute device.

3. The compute device of claim 2, wherein the plurality of instructions, when executed, further cause the compute device to analyze the telemetry data with the network interface controller.

4. The compute device of claim 2, wherein to perform the predefined remedial action comprises to perform the predefined remedial action with the network interface controller.

5. The compute device of claim 1, wherein to send the notification of the key indicator to a remote compute device comprises to send the notification to an orchestrator server.

6. The compute device of claim 1, wherein to send the notification of the key indicator to a remote compute device comprises to send the notification to a remote compute device executing an application that uses the one or more storage devices of the compute device.

7. The compute device of claim 1, wherein to send the notification of the key indicator to a remote compute device comprises to determine a set of remote compute devices to report the key indicator to.

8. A method for producing proactive notifications of data storage performance, the method comprising:
obtaining (1604), by a compute device (204-1, 1240), key indicator data indicative of a performance condition associated with operations of one or more data storage devices (1316) of the compute device, and an associated predefined threshold that, if satisfied, indicates the presence of a key indicator;
obtaining (1614), by the compute device, remedial action data indicative of a remedial action to be performed by the compute device in response to identification of the key indicator in telemetry data produced by the compute device during operation;
analyzing (1634), by the compute device, said telemetry data, produced by the compute device during operation, to determine whether the key indicator is present in the telemetry data;
performing (1660), by the compute device and in response to a determination that the key indicator is present, the predefined remedial action; and
sending (1674), by the compute device, a notification of the key indicator to a remote compute device.

9. The method of claim 8, further comprising analyzing, with the compute device, the telemetry data with a network interface controller.

10. The method of claim 8, wherein performing the predefined remedial action comprises performing the predefined remedial action with a network interface controller.

11. The method of claim 8, wherein performing the predefined remedial action comprises prioritizing data operations for workloads as a function of deadlines associated with the workloads.

12. The method of claim 8, wherein sending the notification of the key indicator to a remote compute device comprises sending the notification to an orchestrator server.

13. The method of claim 8, wherein sending the notification of the key indicator to a remote compute device comprises sending the notification to a remote compute device executing an application that uses the one or more storage devices of the compute device.

14. The method of claim 8, wherein sending the notification of the key indicator to a remote compute device comprises determining a set of remote compute devices to report the key indicator to.

15. One or more machine-readable storage media comprising a plurality of instructions stored thereon that, in response to being executed, cause a compute device to perform the method of any of claims 8-14.

## Patentansprüche

1. Rechenvorrichtung (204-1, 1240) zum Erzeugen proaktiver Benachrichtigungen über eine Datenspeicherleistung, wobei die Rechenvorrichtung Folgendes umfasst:
eine oder mehrere Datenspeichervorrichtungen (1316) ;
einen oder mehrere Prozessoren (1302); und
eine oder mehrere Speichervorrichtungen (1304), in denen mehrere Anweisungen gespeichert sind, die dann, wenn sie durch den einen oder die mehreren Prozessoren ausgeführt werden, bewirken, dass die Rechenvorrichtung Folgendes durchführt:
Erhalten (1604) von Schlüsselindikatordaten, die eine Leistungsbedingung angeben, die Vorgängen der einen oder der mehreren Datenspeichervorrichtungen zugeordnet ist, und eines zugeordneten, vorgegebenen Schwellenwertes, der dann, wenn er erfüllt ist, das Vorhandensein eines Schlüsselindikators angibt;
Erhalten (1614) von Abhilfemaßnahmendaten, die eine Abhilfemaßnahme angeben, die als Antwort auf die Identifikation des Schlüsselindikators in Telemetriedaten, die während des Betriebs durch die Rechenvorrichtung erzeugt werden, durch die Rechenvorrichtung durchgeführt werden soll;
Analysieren (1634) der Telemetriedaten, die während des Betriebs durch die Rechenvorrichtung erzeugt werden, um zu bestimmen, ob der Schlüsselindikator in den Telemetriedaten vorhanden ist;
Durchführen (1660) der vorgegebenen Abhilfemaßnahme als Antwort auf eine Bestimmung, dass der Schlüsselindikator vorhanden ist; und
Senden (1674) einer Benachrichtigung über den Schlüsselindikator an eine entfernte Rechenvorrichtung.

2. Rechenvorrichtung nach Anspruch 1, die ferner eine Netzschnittstellen-Steuereinheit, um mit einer Host-Fabrikschnittstelle der entfernten Rechenvorrichtung zu kommunizieren, umfasst.

3. Rechenvorrichtung nach Anspruch 2, wobei die mehreren Anweisungen dann, wenn sie ausgeführt werden, ferner bewirken, dass die Rechenvorrichtung die Telemetriedaten mit der Netzschnittstellen-Steuereinheit analysiert.

4. Rechenvorrichtung nach Anspruch 2, wobei das Durchführen der vorgegebenen Abhilfemaßnahme umfasst, die vorgegebene Abhilfemaßnahme mit der Netzschnittstellen-Steuereinheit durchzuführen.

5. Rechenvorrichtung nach Anspruch 1, wobei das Senden der Benachrichtigung über den Schlüsselindikator an eine entfernte Rechenvorrichtung umfasst, die Benachrichtigung an einen Orchestrator-Server zu senden.

6. Rechenvorrichtung nach Anspruch 1, wobei das Senden der Benachrichtigung über den Schlüsselindikator an eine entfernte Rechenvorrichtung umfasst, die Benachrichtigung an eine entfernte Rechenvorrichtung zu senden, die eine Anwendung ausführt, die die eine oder mehreren Speichervorrichtungen der Rechenvorrichtung verwendet.

7. Rechenvorrichtung nach Anspruch 1, wobei das Senden der Benachrichtigung über den Schlüsselindikator an eine entfernte Rechenvorrichtung umfasst, eine Gruppe entfernter Rechenvorrichtungen zu bestimmen, an die der Schlüsselindikator berichtet werden soll.

8. Verfahren zum Erzeugen proaktiver Benachrichtigungen über eine Datenspeicherleistung, wobei das Verfahren Folgendes umfasst:
Erhalten (1604) von Schlüsselindikatordaten, die eine Leistungsbedingung angeben, die Vorgängen einer oder mehrerer Datenspeichervorrichtungen (1316) einer Rechenvorrichtung zugeordnet ist, und eines zugeordneten, vorgegebenen Schwellenwertes, der dann, wenn er erfüllt ist, das Vorhandensein eines Schlüsselindikators angibt, durch die Rechenvorrichtung (204-1, 1240);
Erhalten (1614) von Abhilfemaßnahmendaten, die eine Abhilfemaßnahme angeben, die als Antwort auf die Identifikation des Schlüsselindikators in Telemetriedaten, die während des Betriebs durch die Rechenvorrichtung erzeugt werden, durch die Rechenvorrichtung durch geführt werden soll, durch die Rechenvorrichtung;
Analysieren (1634) der Telemetriedaten, die während des Betriebs durch die Rechenvorrichtung erzeugt werden, um zu bestimmen, ob der Schlüsselindikator in den Telemetriedaten vorhanden ist, durch die Rechenvorrichtung;
Durchführen (1660) der vorgegebenen Abhilfemaßnahme durch die Rechenvorrichtung und als Antwort auf eine Bestimmung, dass der Schlüsselindikator vorhanden ist; und
Senden (1674) einer Benachrichtigung über den Schlüsselindikator an eine entfernte Rechenvorrichtung durch die Rechenvorrichtung.

9. Verfahren nach Anspruch 8, das ferner das Analysieren der Telemetriedaten mit der Rechenvorrichtung mit einer Netzschnittstellen-Steuereinheit umfasst.

10. Verfahren nach Anspruch 8, wobei das Durchführen der vorgegebenen Abhilfemaßnahme das Durchführen der vorgegebenen Abhilfemaßnahme mit einer Netzschnittstellen-Steuereinheit umfasst.

11. Verfahren nach Anspruch 8, wobei das Durchführen der vorgegebenen Abhilfemaßnahme das Priorisieren von Datenvorgängen für Arbeitslasten als eine Funktion von Terminen, die den Arbeitslasten zugeordnet sind, umfasst.

12. Verfahren nach Anspruch 8, wobei das Senden der Benachrichtigung über den Schlüsselindikator an eine entfernte Rechenvorrichtung das Senden der Benachrichtigung an einen Orchestrator-Server umfasst.

13. Verfahren nach Anspruch 8, wobei das Senden der Benachrichtigung über den Schlüsselindikator an eine entfernte Rechenvorrichtung das Senden der Benachrichtigung an eine entfernte Rechenvorrichtung, die eine Anwendung ausführt, die die eine oder mehreren Speichervorrichtungen der Rechenvorrichtung verwendet, umfasst.

14. Verfahren nach Anspruch 8, wobei das Senden der Benachrichtigung über den Schlüsselindikator an eine entfernte Rechenvorrichtung das Bestimmen einer Gruppe entfernter Rechenvorrichtungen, an die der Schlüsselindikator berichtet werden soll, umfasst.

15. Ein oder mehrere maschinenlesbare Speichermedien, die mehrere darauf gespeicherte Anweisungen umfassen, die als Antwort darauf, dass sie ausgeführt werden, bewirken, dass eine Rechenvorrichtung das Verfahren nach einem der Ansprüche 8-14 durchführt.

## Revendications

1. Dispositif informatique (204-1, 1240) pour produire des notifications proactives de performances de stockage de données, le dispositif informatique comprenant :
un ou plusieurs dispositifs de stockage de données (1316) ;
un ou plusieurs processeurs (1302) ; et
un ou plusieurs dispositifs de mémoire (1304) dans lesquels sont stockées une pluralité d'instructions qui, lorsqu'elles sont exécutées par lesdits un ou plusieurs processeurs, amènent le dispositif informatique à :
obtenir (1604) des données d'indicateur clé indiquant une condition de performances associée à des opérations desdits un ou plusieurs dispositifs de stockage de données et un seuil prédéfini associé qui, s'il est satisfait, indique la présence d'un indicateur clé ;
obtenir (1614) des données d'action corrective indiquant une action corrective à effectuer par le dispositif informatique en réponse à l'identification de l'indicateur clé dans les données de télémétrie produites par le dispositif informatique pendant une opération ;
analyser (1634) lesdites données de télémétrie, produites par le dispositif informatique pendant une opération, pour déterminer si l'indicateur clé est présent dans les données de télémétrie ;
exécuter (1660), en réponse à une détermination de la présence de l'indicateur clé, l'action corrective prédéfinie ; et
envoyer (1674) une notification de l'indicateur clé à un dispositif informatique distant.

2. Dispositif informatique selon la revendication 1, comprenant en outre un contrôleur d'interface réseau pour communiquer avec une interface de matrice d'interconnexion d'hôte du dispositif informatique distant.

3. Dispositif informatique selon la revendication 2, dans lequel la pluralité d'instructions, lorsqu'elles sont exécutées, amènent en outre le dispositif informatique à analyser les données de télémétrie au moyen du contrôleur d'interface réseau.

4. Dispositif informatique selon la revendication 2, dans lequel l'exécution de l'action corrective prédéfinie comprend l'exécution de l'action corrective prédéfinie au moyen du contrôleur d'interface réseau.

5. Dispositif informatique selon la revendication 1, dans lequel l'envoi de la notification de l'indicateur clé à un dispositif informatique distant comprend l'envoi de la notification à un serveur d'orchestration.

6. Dispositif informatique selon la revendication 1, dans lequel l'envoi de la notification de l'indicateur clé à un dispositif informatique distant comprend l'envoi de la notification à un dispositif informatique distant exécutant une application qui utilise lesdits un ou plusieurs dispositifs de stockage du dispositif informatique.

7. Dispositif informatique selon la revendication 1, dans lequel l'envoi de la notification de l'indicateur clé à un dispositif informatique distant comprend la détermination d'un ensemble de dispositifs informatiques distants à qui signaler l'indicateur clé.

8. Procédé pour produire des notifications proactives de performances de stockage de données, le procédé comprenant :
l'obtention (1604), par un dispositif informatique (204-1, 1240), de données d'indicateur clé indiquant une condition de performances associée à des opérations d'un ou plusieurs dispositifs de stockage de données (1316) du dispositif informatique, et un seuil prédéfini associé qui, s'il est satisfait, indique la présence d'un indicateur clé ;
l'obtention (1614), par le dispositif informatique, de données d'action corrective indiquant une action corrective à effectuer par le dispositif informatique en réponse à l'identification de l'indicateur clé dans les données de télémétrie produites par le dispositif informatique pendant une opération ;
l'analyse (1634), par le dispositif informatique, desdites données de télémétrie, produites par le dispositif informatique pendant une opération, pour déterminer si l'indicateur clé est présent dans les données de télémétrie ;
l'exécution (1660), par le dispositif informatique et en réponse à une détermination de la présence de l'indicateur clé, de l'action corrective prédéfinie ; et
l'envoi (1674), par le dispositif informatique, d'une notification de l'indicateur clé à un dispositif informatique distant.

9. Procédé selon la revendication 8, comprenant en outre l'analyse, par le dispositif informatique, des données de télémétrie au moyen d'un contrôleur d'interface réseau.

10. Procédé selon la revendication 8, dans lequel l'exécution de l'action corrective prédéfinie comprend l'exécution de l'action corrective prédéfinie au moyen d'un contrôleur d'interface réseau.

11. Procédé selon la revendication 8, dans lequel l'exécution de l'action corrective prédéfinie comprend la hiérarchisation d'opérations de données liées à des charges de travail en fonction de délais associés aux charges de travail.

12. Procédé selon la revendication 8, dans lequel l'envoi de la notification de l'indicateur clé à un dispositif informatique distant comprend l'envoi de la notification à un serveur d'orchestration.

13. Procédé selon la revendication 8, dans lequel l'envoi de la notification de l'indicateur clé à un dispositif informatique distant comprend l'envoi de la notification à un dispositif informatique distant exécutant une application qui utilise lesdits un ou plusieurs dispositifs de stockage du dispositif informatique.

14. Procédé selon la revendication 8, dans lequel l'envoi de la notification de l'indicateur clé à un dispositif informatique distant comprend la détermination d'un ensemble de dispositifs informatiques distants à qui signaler l'indicateur clé.

15. Un ou plusieurs supports de stockage lisibles par machine comprenant une pluralité d'instructions stockées sur celui-ci, qui, en réponse à leur exécution, amènent un dispositif informatique à mettre en œuvre le procédé selon l'une quelconque des revendications 8-14.
